# EUROPEAN PATENT SPECIFICATION

(11) **EP 4 254 808 B1**
(45) Date of publication and mention of the grant of the patent: **28.01.2026**
(21) Application number: 21899762.5
(22) Date of filing: 21.10.2021
(51) Int. Cl.: H04B 1/00, H04B 1/40, H04B 1/44, H04B 1/401

(54) **RADIO FREQUENCY L-PA MID DEVICE, RADIO FREQUENCY TRANSCEIVING SYSTEM AND COMMUNICATION DEVICE**
HOCHFREQUENZ-L-PA-MID-VORRICHTUNG, HOCHFREQUENZ-SENDEEMPFANGSSYSTEM UND KOMMUNIKATIONSVORRICHTUNG
DISPOSITIF L-PA MID RADIOFRÉQUENCE, SYSTÈME D'ÉMISSION-RÉCEPTION RADIOFRÉQUENCE ET DISPOSITIF DE COMMUNICATION

(30) Priority: 02.12.2020 CN 202022859774 U
(43) Date of publication of application: 04.10.2023
(73) Proprietor: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Grassi, Stefano
(86) International application number: PCT/CN2021/125296
(87) International publication number: WO 2022/116728

(56) References cited:
- CN-A- 105 099 493
- CN-A- 105 978 584
- CN-A- 108 880 602
- CN-A- 111 294 081
- CN-U- 213 661 598
- US-A1- 2016 028 432
- US-A1- 2019 288 715
- US-A1- 2019 288 736
- US-A1- 2020 028 562

## Description

### TECHNICAL FIELD

The disclosure relates to the field of radio frequency technologies, and more particularly to a radio frequency L-PA Mid device, a radio frequency transceiving system, and a communication device.

### BACKGROUND

The description in this section merely provides background information related to the present disclosure and do not necessarily constitute an exemplary prior art.

With the development and progress of technology, the 5^{th} generation (5G) mobile communication technology is gradually applied to electronic devices. Communication frequencies of the 5G mobile communication technology are higher than that of the 4^{th} generation (4G) mobile communication technology. An existing radio frequency transceiving system is provided with a radio frequency front-end module to support a preset low-frequency signal (such as N28 frequency band signal); and the module is provided with a transceiving device with a built-in power amplifier and an external circuit arranged on the periphery of the transceiving device, to support transceiving processing of the N28 frequency band signal.

US 2019/0288715 A1 disclose a multiway switch, a radio frequency system, and a wireless communication device. The multiway switch includes six T ports and 2" P ports. The six T ports include two first T ports and each of the two first T ports is coupled with all of the 2" P ports. n is an integer and n≥2. The multiway switch is configured to be coupled with a radio frequency circuit and an antenna system of a wireless communication device operable in a dual-frequency single transmit mode, to implement a preset function of the wireless communication device. The antenna system includes 2" antennas corresponding to the 2" P ports. The preset function is a function of transmitting a sounding reference signal (SRS) through the 2" antennas in turn.

However, in the radio frequency front-end module, a link loss of a transceiving link for the preset low frequency signal is too large, resulting in poor performance of the radio frequency front-end module.

### SUMMARY

According to various embodiments of the present disclosure, a radio frequency L-PA Mid (i.e., generally an abbreviation of low noise amplifier (LNA) plus power amplifier modules with integrated duplexers) device, a radio frequency transceiving system, and a communication device are provided. The invention is set out in the appended set of claims.

The details of one or more embodiments of the present disclosure are presented in the accompanying drawings and descriptions below. Other features, objectives, and advantages of the present disclosure will become apparent from the description, the drawings, and the claims.

### BRIEF DESCRIPTION OF DRAWINGS

In order to illustrate embodiments of the present disclosure or technical solutions in the related art more clearly, the accompanying drawings used for the description of the embodiments or the related art will be briefly introduced below. Apparently, the accompanying drawings in the following description are merely some embodiments of the present disclosure. For those skilled in the art, other drawings can be obtained based on these drawings without any creative effort.
FIG. 1 illustrates a schematic first structural block diagram of a radio frequency L-PA Mid device according to an embodiment.
FIG. 2 illustrates a schematic second structural block diagram of the radio frequency L-PA Mid device according to an embodiment.
FIG. 3 illustrates a schematic third structural block diagram of the radio frequency L-PA Mid device according to an example useful for understanding the invention but outside the scope of the invention as claimed.
FIG. 4 illustrates a schematic fourth structural block diagram of the radio frequency L-PA Mid device according to an embodiment.
FIG. 5 illustrates a schematic fifth structural block diagram of the radio frequency L-PA Mid device according to an example useful for understanding the invention but outside the scope of the invention as claimed.
FIG. 6 illustrates a schematic relationship curve between an input power and an output power of a power amplifier according to an embodiment.
FIG. 7 illustrates a schematic sixth structural block diagram of the radio frequency L-PA Mid device according to an example useful for understanding the invention but outside the scope of the invention as claimed.
FIG. 8 illustrates a schematic seventh structural block diagram of the radio frequency L-PA Mid device according to an embodiment.
FIG. 9 illustrates a schematic eighth structural block diagram of the radio frequency L-PA Mid device according to an embodiment.
FIG. 10 illustrates a schematic first structural block diagram of a radio frequency transceiving system according to an embodiment.
FIG. 11 illustrates a schematic second structural block diagram of the radio frequency transceiving system according to an embodiment.
FIG. 12 illustrates a schematic third structural block diagram of the radio frequency transceiving system according to an embodiment.
FIG. 13 illustrates a schematic fourth structural block diagram of the radio frequency transceiving system according to an embodiment.
FIG. 14 illustrates a schematic fifth structural block diagram of the radio frequency transceiving system according to an embodiment.
FIG. 15 illustrates a schematic sixth structural block diagram of the radio frequency transceiving system according to an embodiment.
FIG. 16 illustrates a schematic seventh structural block diagram of the radio frequency transceiving system according to an embodiment.
FIG. 17 illustrates a schematic eighth structural block diagram of the radio frequency transceiving system according to an embodiment.

### DETAILED DESCRIPTION OF EMBODIMENTS

In order to facilitate the understanding of the present disclosure and to make the above purposes, features, and advantages of the present disclosure more apparent and understandable, specific embodiments of the present disclosure will be described in detail below with reference to the accompanying drawings. In the following description, numerous specific details are set forth in order to provide a thorough understanding of the present disclosure, and the accompanying drawings provide illustrated embodiments of the present disclosure. However, the present disclosure can be implemented in many different forms, and is not limited to the embodiments described herein. Rather, these embodiments are provided so that the present disclosure will be more fully understood. The present disclosure can be implemented in many other different ways than those described herein, and those skilled in the art can make similar improvements without departing from the present disclosure. Therefore, the present disclosure is not limited by the specific embodiments disclosed below.

In addition, the terms "first" and "second" are merely used for descriptive purposes and are not to be construed as indicating or implying relative importance or implying quantities of technical features indicated. Therefore, a feature defined with "first" and "second" may explicitly or implicitly include at least one of the feature. In the description of the present disclosure, "multiple" means at least two, such as two, three, etc., unless otherwise specified. In the description of the present disclosure, "several" means at least one, such as one, two, etc., unless otherwise specified.

A radio frequency (RF) L-PA Mid device according to some embodiments of the present disclosure can be applied to communication devices with wireless communication functions. The communication devices may be handheld devices, vehicle-mounted devices, wearable devices, computing devices or other processing devices connected to wireless modems, various forms of user equipment abbreviated as UE (such as mobile phones), mobile stations (MS), and so on. For convenience of description, the devices mentioned above are collectively referred to as communication devices. Network equipment may include base stations, access points, etc.

An embodiment of the present disclosure provides a RF L-PA Mid device. The RF L-PA Mid device can be referred to as a low noise amplifier (LNA) plus power amplifier modules with integrated duplexers device (generally also referred to as power amplifier modules including duplexers with LNA). The RF L-PA Mid device can support the receiving and transmitting of multiple low-band signals of different bands and a preset low-frequency signal. Therefore, the RF L-PA Mid device in the illustrated embodiment of the present disclosure may also be referred to as a low band PA Mid with LNA (abbreviated as LB L-PA Mid) device.

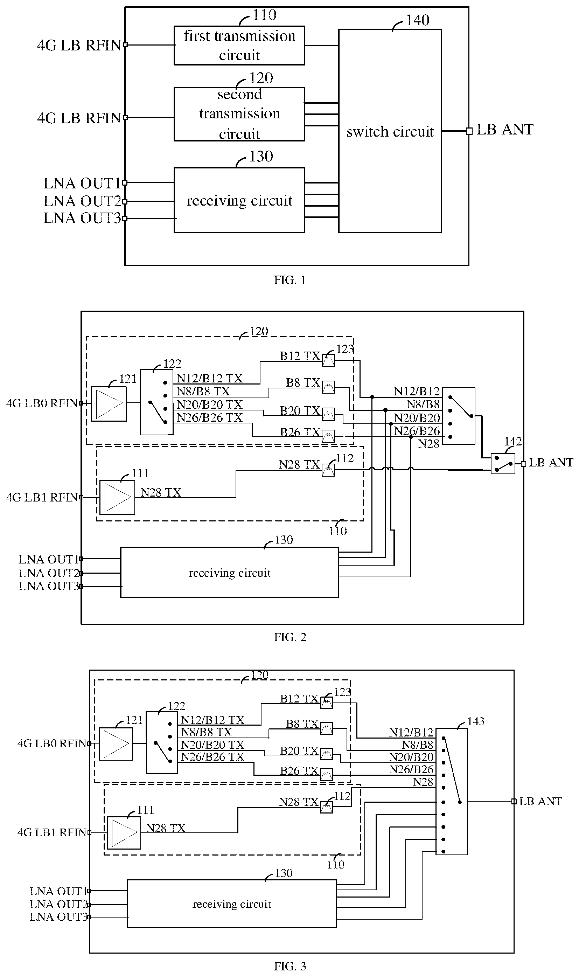

As illustrated in FIG. 1, in one embodiment, the RF L-PA Mid device can be understood as a package structure, and the RF L-PA Mid device is configured with transmitting ports 4G LB RFIN, an antenna port LB ANT, and multiple receiving ports LNA OUT. The transmitting ports 4G LB RFIN, the antenna port LB ANT, and the multiple receiving ports LNA OUT configured in the device can be understood as RF pin terminals of the RF L-PAMid device, which are used to connect to various external devices. Specifically, the receiving ports LNA OUT and the low-frequency transmitting ports 4G LB RFIN may be used to connect to an RF transceiver. The antenna port LB ANT may be used to connect to an antenna.

Specifically, the RF L-PA Mid device includes a first transmitting circuit 110, a second transmitting circuit 120, a receiving circuit 130, and a switch circuit 140. An input terminal of the first transmitting circuit 110 is connected to the transmitting port 4G LB RFIN, and an output terminal of the first transmitting circuit 110 is connected to the switch circuit 140. The first transmitting circuit 110 is configured to perform amplification processing on the preset low-frequency signal received by the transmitting port 4G LB RFIN. The preset low-frequency signal is a signal of N28 frequency band. An input terminal of the second transmitting circuit 120 is connected to the transmitting port 4G LB RFIN, and an output terminal of the second transmitting circuit 120 is connected to the switch circuit 140. Specifically, the second transmitting circuit 120 is configured to perform amplification processing on the multiple low-band signals received by the transmitting port 4G LB RFIN. In some embodiments, the second transmitting circuit 120 may have multiple radio frequency paths to support the transmitting of the multiple low-band signals. The frequency bands of the multiple low-band signals at least includes the frequency bands of B8, B12, B20, B26, N8, B28, N20, and N26. In addition, the frequency bands of the multiple low-band signals further includes the frequency bands of B13 and B29.

In the embodiment of the present disclosure, it should be noted that for the RF L-PA Mid device, the relationship between 5G new radio (abbreviated as NR) and 4G long term evolution (abbreviated as LTE) is shown in Table 1. It can be seen from the Table 1 that certain frequency bands of 4G LTE and 5G NR are the same. Therefore, the physical transceiving channels of N26, N8, and N20 share the same transceiving channels with B26, B8, and B20, respectively.

**Table 1 Basic information of 4G LTE and 5G NR**

| 4G LTE | | | 5G NR | | |
|---|---|---|---|---|---|
| Frequency band | Frequency range | Maximum bandwidth | Frequency band | Frequency range | Maximum bandwidth |
| B26 | 814∼849 | 10 megahertz (MHz) | N26 | 824∼849 | 20MHz |
| B8 | 880∼915 | 10MHz | N8 | 880∼915 | 20MHz |
| B20 | 832∼862 | 10MHz | N20 | 832∼862 | 20MHz |
| B28A | 703∼728 | 10MHz | N28A | 703∼728 | 20MHz |
| B28B | 728∼748 | 10MHz | N28B | 728∼748 | 20MHz |

The receiving circuit 130 is connected to the switch circuit 140 and the multiple receiving ports LNA OUT individually and configured to perform amplification on the received preset low-frequency signal and multiple low-band signals. That is to say, the receiving circuit 130 may support the receiving control of the preset low-frequency signal and any one of the low-band signals mentioned above. The receiving circuit 130 may also be equipped with multiple RF paths used to transmit the preset low-frequency signal and the respective low-band signals. In some embodiments, corresponding RF paths may be set for the frequency bands of N28, B8, B12, B20, B26, N8, B28, N20, and N26. The antenna port LB ANT, the switch circuit 140, the receiving circuit 130, and any one of the receiving ports LNA OUT together form a receiving path, that is, a receiving path may be set for the preset low-frequency signal and the low-band signal of each frequency band to support the receiving processing of the preset low-frequency signal and the multiple low-band signals.

Multiple first ends of the switch circuit 140 are respectively connected to the first transmitting circuit 110, the second transmitting circuit 120, and the receiving circuit 130, a second end of the switch circuit 140 is connected to the antenna port LB ANT, and the switch circuit 140 is configured to make RF paths between the first transmitting circuit 110 and the antenna port LB ANT, between the second transmitting circuit 120 and the antenna port LB ANT, and between the receiving circuit 130 and the antenna port LB ANT be selectively switched on. That is to say, the switch circuit 140 is used to make the transmitting paths or receiving paths of the preset low-frequency signal and the multiple low-band signals be selectively switched on.

It should be noted that the switch circuit 140 include multiple switches, and the number of first ends of the switch circuit 140 is associated with the number of RF signals that can be processed by the first transmitting circuit 110, the second transmitting circuit 120, and the receiving circuit 130.

The above RF L-PA Mid device includes the first transmitting circuit 110, the second transmitting circuit 120, the receiving circuit 130, and the switch circuit 140, that is, the first transmitting circuit 110 for transmitting the preset low-frequency signal (the N28 frequency band signal) and the receiving circuit 130 for receiving the preset low-frequency signal are integrated within the device. Compared to the devices in the related art that use an external duplexer to support the transceiving processing of the preset low-frequency signal, the insertion loss of the transceiving link of the device of the present disclosure can be reduced, the output power of the device of the present disclosure to the preset low-frequency signal is improved, and the sensitivity performance of the preset low-frequency signal is improved, so that the communication performance of the device of the disclosure can be improved. In addition, compared to the devices in the related art, the integration of the device of the disclosure can be improved and the area of the device of the disclosure can be saved, which is conducive to the miniaturization of the device. Moreover, the logic control and power supply network laying of the switch circuit 140 are provided by the RF L-PA Mid device itself, which will not affect other elements of the RF PA Mid RF device and can also reduce costs.

As illustrated in FIG. 2, in one embodiment, the switch circuit 140 includes a first switch unit 141 and a second switch unit 142. The first switch unit 141 includes multiple first ends and one second end, and the multiple first ends of the first switch unit 141 are respectively connected to the second transmitting circuit 120 and the receiving circuit 130. The second switch unit 142 includes two first ends and one second end. One of the two first ends of the second switch unit 142 is connected to the second end of the first switch unit 141, the other one of the two first ends of the second switch unit 142 is connected to the first transmitting circuit 110, and the second end of the second switch unit 142 is connected to the antenna port LB ANT.

Specifically, the first switch unit 141 may be an SPnT switch. In some embodiments, the first switch unit 141 may be an SP9T switch, and the second switch unit 142 is a single pole double throw (SPDT) switch. In the embodiment of the present disclosure, n may be set based on the number of multiple low-band signals and the internal structural characteristics of the second transmitting circuit 120 and the receiving circuit 130, which is not further limited herein.

In this situation, the transmitting path of the preset low-frequency signal in the RF L-PA Mid device is the transmitting port 4G LB RFIN → the first transmitting circuit 110 → the second switch unit 142 → the antenna port LB ANT.

As illustrated in FIG. 3 which is an example useful for understanding the invention but outside the scope of the invention as claimed, the switch circuit 140 includes a multi-channel selection switch 143, multiple first ends of the multi-channel selection switch 143 are respectively connected to the first transmitting circuit 110, the second transmitting circuit 120, and the receiving circuit 130. One second end of the multi-channel selection switch 143 is connected to the antenna port LB ANT.

Specifically, the multi-channel selection switch 143 may be an SPmT switch, where m ≥ 4. In some embodiment, the multi-channel selection switch 143 may be an SP10T switch. In the embodiment of the present disclosure, m may be set based on the preset low-frequency signal, the number of multiple low-band signals, and the internal structural characteristics of the first transmitting circuit 110, the second transmitting circuit 120, and the receiving circuit 130, which is not further limited herein.

In this case, the transmitting path of the preset low-frequency signal in the RF L-PA Mid device is the transmitting port 4G LB RFIN → the first transmitting circuit 110 → the multi-channel selection switch 143 → the antenna port LB ANT.

Based on the RF L-PA Mid devices illustrated in FIG. 2 and FIG. 3, it can be seen that the switch of the transmitting path of the preset low-frequency signal illustrated in FIG. 2 is different from the switch of the transmitting path of the preset low-frequency signal illustrated in FIG. 3, in which one is the SPDT switch and the other is the SPmT switch (m ≥ 4), and the insertion loss of the SPDT switch is lower than that of the SPmT switch, so that the insertion loss values of the receiving path and the transmitting path of the preset low-frequency signal (N28 frequency band signal) can be reduced, thus improving the transmitting power and sensitivity of the preset low-frequency signal.

In addition, compared to the first switch unit 141 and the second switch unit 142 in the RF L-PA Mid device illustrated in FIG. 2, the multi-channel selection switch 143 in the RF L-PAMid device illustrated in FIG. 3 reduces the use of one-stage switch, thereby reducing the insertion loss of any transmitting path. For the transmitting paths of the multiple low-band signals, the RF L-PA Mid device illustrated in FIG. 3 can reduce the insertion loss by 0.5 decibels (dB), thereby improving the output power of the multiple low-band signals at the antenna port LB ANT to meet the research and development standard requirements of 26.0 decibel-milliwatts (dBm) issued by major operators.

As illustrated in FIGS. 1 to 3, in one embodiment, the number of the transmitting ports 4G LB RFIN is multiple, and the multiple transmitting ports respectively serves as a first transmitting port 4G LB0 RFIN and a second transmitting port 4G LB1 RFIN. The input terminal of the first transmitting circuit 110 is connected to the first transmitting port 4G LB0 RFIN, and the input terminal of the second transmitting circuit 120 is connected to the second transmitting port 4G LB1 RFIN.

As illustrated in FIG. 2 and FIG. 3, in one embodiment, the first transmitting circuit 110 includes a first power amplifier 111 and a first filter unit 112. The second transmitting circuit 120 includes a second power amplifier 121, a fourth switch unit 122, and multiple second filter units 123. An input terminal of the first power amplifier 111 is connected to the second transmitting port 4G LB1 RFIN and the first power amplifier 111 is configured to perform power amplification on the received preset low-frequency signal. The first filter unit 112 is individually connected to an output terminal of the first power amplifier 111 and the switch circuit 140 and is configured to perform filtering processing the preset low-frequency signal. Specifically, when the preset low-frequency signal is the N28 frequency band signal, the first power amplifier 111 and the first filter unit 112 can support the corresponding processing of the N28 frequency band signal. It should be noted that after the filtering processing of the first filter unit 112, the first filter unit 112 can output the N28 frequency band signal without noise. The second transmitting port 4G LB1 RFIN, the first power amplifier 111, the first filter unit 112, the switch circuit 140, and the antenna port LB ANT form the first transmitting path. which is used to support the transmitting processing of the preset low-frequency signal.

An input terminal of the second power amplifier 121 is connected to the first transmitting port 4G LB0 RFIN and the second power amplifier 121 is configured to perform power amplification on the received multiple preset low-frequency signal. A first end of the fourth switch unit 122 is connected to the output terminal of the first power amplifier 111, input terminals of the respective second filter units 123 are correspondingly connected to second ends of the fourth switch unit 122, output terminals of the respective second filter units 123 are correspondingly connected to the switch circuit 140, the second filter units 123 are configured to perform filtering processing the low-band signals, and the frequency bands of the low-band signals output by respective second filter units 123 are different. Specifically, the second power amplifier 121 can perform power amplification on the multiple low-band signals received by the first transmitting port 4G LB0 RFIN, and then transmit the low-band signals processed by the second power amplifier 121 to the respective second filter units 123 through the fourth switch units 122; and the frequency bands of the low-band signals respectively output by the second filter units 123 are different. It can be understood that the filtering paths in the multiple transmitting paths are independent of each other and do not overlap with each other.

Specifically, the second filter units 123 only allow low-band signals of the preset frequency bands to pass through. In some embodiment, if the frequency bands of multiple low-band signals can be divided into eight different frequency bands: B12 (N12), B8 (N8), B20 (N20), and B26 (N26), four second filter units 123 (i.e., four filters) can be set accordingly to achieve filtering processing for the eight low-band signals. Correspondingly, the fourth switch unit 122 may be an SP4T switch, a first end of the SP4T switch is connected to the output terminal of the second power amplifier 121, and four second ends of the SP4T switch are correspondingly connected to the four second filter units 123 in a one-to-one manner. After filtering by the four second filter units 123, the eight low-band signals B12 (N12), B8 (N8), B20 (N20), and B26 (N26) can be output to the switch circuit 140.

The first transmitting port 4G LB0 RFIN, the fourth switch unit 122, and one second filter 123 can form one RF path. The frequency band of the low-band signal output by the second filter 123 corresponds to the RF path of that frequency band. In some embodiment, the RF path where the second filter 123 outputs the B8/N8 frequency band can be understood as the B8/N8 RF path, and the RF path where the second filter 123 outputs the B20/N20 frequency band can be understood as the B20/N20 RF path. In addition, the transmitting port 4G LB RFIN, the second power amplifier 121, the fourth switch unit 122, one second filter 123, the switch circuit 140, and the antenna port LB ANT form a second transmitting path, and the second transmitting path is used to transmit any low-band RF signal.

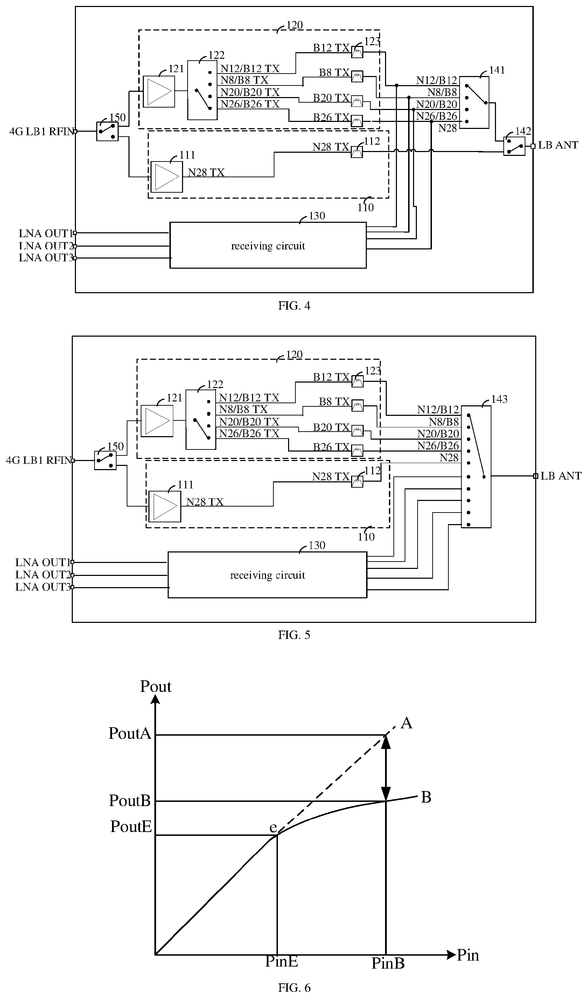

As illustrated in FIG. 4 and FIG. 5, in one embodiment, the RF L-PA Mid device is configured with one transmitting port 4G LB RFIN. The RF L-PA Mid device further includes a third switch unit 150, one first end of the third switch unit 150 is connected to the transmitting port 4G LB RFIN, and two second ends of the third switch unit 150 are respectively connected to the input terminal of the first transmitting circuit 110 and the input terminal of the second transmitting circuit 120. Specifically, the third switch unit 150 may be an SPDT switch, a single terminal of the SPDT switch is connected to the transmitting port 4G LB RFIN, two selection terminals of the SPDT switch are respectively connected to the input terminal of the first power amplifier 111 and the input terminal of the second power amplifier 121.

In this embodiment, by setting the third switch unit 150 between the transmitting port 4G LB RFIN and the first power amplifier 111 (i.e., the front end of the power amplifier), the number of the transmitting port 4G LB RFIN can be reduced from 2 to 1, thereby saving the number of the transmitting port 4G LB RFIN for the RF L-PA Mid device and correspondingly reducing the resources of the RF input interface of the RF transceiver connected to the transmitting port 4G LB RFIN. In this situation, based on the formula Pout = Pin + Gain, where Pout is the output power, Pin is the input power, and Gain is the gain of the device. According to this formula, the output power of the power amplifier is related to the input power and the device gain. As illustrated in FIG. 6, the maximum linear output power of the power amplifier is PoutE, and the corresponding input power is PinE. Due to the SPDT switch being located at the input terminal of the first power amplifier 111, it will increase the insertion loss of the RF input terminal. As illustrated in the insertion loss data of the SPDT switch in Table 2, the insertion loss in the LB frequency band is 0.2 dB, while the output power of the RF transceiver needs to be increased by an additional 0.2 dB, which has no impact on the quality of the RF input signal.

**Table 2 SPDT switch insertion loss table**

| | | | |
|---|---|---|---|
| Frequency (MHz) | 1000∼1600 | 1600∼3000 | 3000~4500 |
| Loss (dB) | 0.20 | 0.25 | 0.30 |

Therefore, adding the SPDT switch will not affect the maximum linear output power, that is, it will not affect the transmitting output power and its performance.

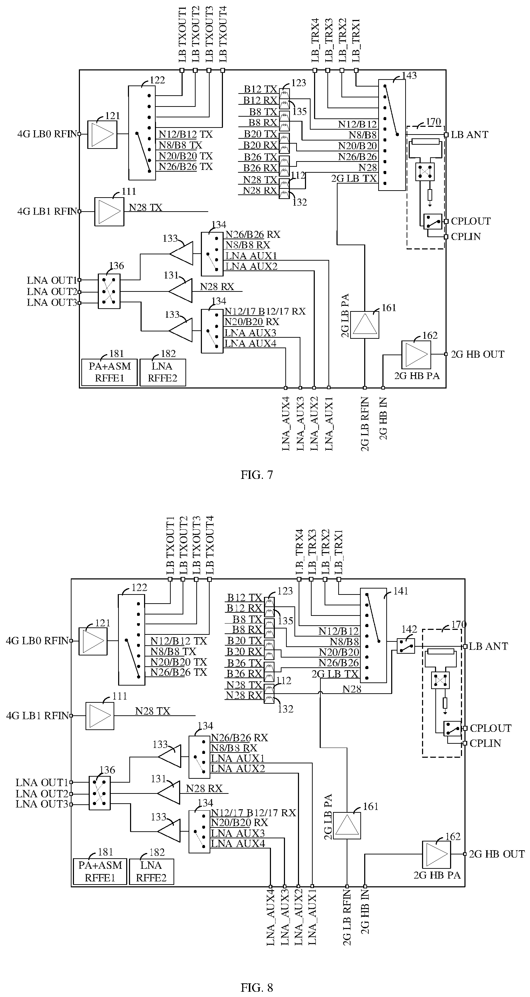

As illustrated in FIG. 7, FIG. 8 and FIG. 9, in one embodiment, the receiving circuit 130 includes a first low noise amplifier 131, a third filter unit 132, at least one second low noise amplifier 133, a fifth switch unit 134, and multiple fourth filter units 135. An output terminal of the first low noise amplifier 131 is connected to one receiving port LNA OUT and the first low noise amplifier 131 is configured to perform amplification processing on the received preset low-frequency signal. The third filter unit 132 is connected to the input terminal of the first low noise amplifier 131 and the switch circuit 140 individually and configured to perform filtering processing on the amplified preset low-frequency signal. Specifically, when the preset low-frequency signal is the N28 frequency band signal, the first low noise amplifier 131 and the third filter unit 132 can support low noise amplification and filtering processing of the N28 frequency band signal. It should be noted that after filtering processing by the third filter unit 132, it can output the N28 frequency band signal without noise. The antenna port LB ANT, the switch circuit 140, the third filter unit 132, the first low noise amplifier 131, and the receiving port LNA OUT form a first receiving path, which is used to support the receiving processing of the preset low-frequency signal.

In one embodiment, the number of the receiving port LNA OUT may be set to three, the second low noise amplifier 133 may be set to two, and the fifth switch unit 134 may correspondingly include two first ends and multiple second ends. An output terminal of each second low noise amplifier 133 is correspondingly connected to one receiving port LNA OUT, and the two first ends of the fifth switch unit 134 are respectively connected to the input terminals of the two second low noise amplifiers 133 in a one-to-one manner. Input terminals of the respective fourth filter units 135 are correspondingly connected to the switch circuit 140, the output terminal of each fourth filter 135 is correspondingly connected to one second end of the fifth switch unit 134, the fourth filter is configured to perform filtering processing the received low-band signal, and the frequency bands of the low-band signals respectively output by the fourth filter units 135 are different. The antenna port LB ANT, the switch circuit 140, the fourth filter 135, the fifth switch unit 134, the second low noise amplifier 133, and the receiving port LNA OUT form a second receiving path to support the receiving processing of any low-band signal.

In one embodiment, the second filter 123 and the fourth filter 135 may be connected to the same terminal of the switch circuit 140. In an illustrated embodiment, the filters set on the transmitting path and the receiving path for corresponding filtering processing B8 (N8) may be connected to the same terminal of the switch circuit 140 individually. It should be noted that in the embodiment of the present disclosure, the number of the filters connected to the same terminal of the switch circuit 140 and the frequency ranges of the low-band signals used for filtering processing by the connected filters are not further limited, and may be set according to the frequency ranges of the respective low-band signals.

It should be noted that in the embodiment of the present disclosure, the number and type of the fifth switch unit 134 are not further limited. In an illustrated embodiment, the fifth switch unit 134 may include one switch, such as a double pole multi throw switch. In another illustrated embodiment, the fifth switch unit 134 may include two RF switches, such as two SPDT switches or two SP4T switches.

In one embodiment, the receiving circuit 130 further includes a sixth switch unit 136. Specifically, multiple first ends of the sixth switch unit 136 are respectively connected to multiple receiving ports LNA OUT in a one-to-one manner, and multiple second ends of the sixth switch unit 136 are respectively connected to the output terminal of the first low noise amplifier 131 and the output terminals of the respective second low noise amplifiers 133 in a one-to-one manner. More specifically, the number of receiving ports LNA OUT is equal to the number of the first ends of the sixth switch unit 136, and the sum of the number of the first low noise amplifier 131 and the second low noise amplifier 133 is equal to the number of the second ends of the sixth switch unit 136. In an illustrated embodiment, the RF L-PA Mid device is equipped with three receiving ports (i.e., LNA OUT1, LNA OUT2, and LNA OUT3), one first low noise amplifier 131, and two second low noise amplifiers 133, in which the sixth switch unit 136 may be a 3P3T switch.

By setting the sixth switch unit 136 in the RF L-PA Mid device, the flexibility of the low-band signals output by the multiple receiving ports LNA OUT can be improved, that is, each receiving port LNA OUT can output the low-band signal of any frequency band to the RF transceiver.

As illustrated in FIG. 7, FIG. 8, FIG. 9, in one embodiment. the RF L-PA Mid device is further configured with multiple auxiliary transmitting ports LB TXOUT1, LB TXOUT2, LB TXOUT3, LB TXOUT4, multiple transceiving ports LB_TRX1, LB_TRX2, LB_TRX3, LB_TRX4, and multiple auxiliary receiving ports LNA_AUX1, LNA_AUX2, LNA_AUX3, LNA_AUX4, which are configured to be connected to an external switching circuit. Specifically, the multiple auxiliary transmitting ports are respectively connected to the transmitting circuit, the multiple auxiliary transceiving ports are connected to the switch circuit, and the multiple auxiliary receiving ports are connected to the receiving circuit.

In one embodiment, the multiple auxiliary transmitting ports LB TXOUT1, LB TXOUT2, LB TXOUT3, LB TXOUT4 may be used to transmit signals in the frequency bands of B13, B28A (N28A), B28B, and B29. That is, the transmitting and receiving paths of the signals in the four frequency bands of B13, B28A (N28A), B28B, and B29 further include external switching circuits (or filtering circuits) (not illustrated in the figure). It should be noted that when the filters of the signals in the four frequency bands of B13, B28A (N28A), B28B, and B29 are externally connected, the filters in the four frequency bands of B13, B28A (N28A), B28B, and B29 may be omitted in the transmitting and receiving circuits. In this situation, various switches in the second transmitting circuit, the receiving circuit, and the switch circuit may also be adjusted adaptively. In an illustrated embodiment, some of the second ends of the fourth switch unit 122 of the second transmitting circuit are respectively connected to the second filter units 123 in a one-to-one manner, and the remaining second ends of the fourth switch unit 122 are respectively connected to the multiple auxiliary transmitting ports LB TXOUT1, LB TXOUT2, LB TXOUT3, and LB TXOUT4 in a one-to-one manner. Some of the first ends of the switch circuit are respectively connected to the first filter unit 112, the third filter unit 132, the multiple second filter units 123, and the multiple fourth filter units 135 in a one-to-one manner, and the remaining first ends of the switch circuit are respectively connected to the multiple auxiliary transceiving ports LB_TRX1, LB_TRX2, LB_TRX3, LB_TRX4 in a one-to-one manner. Some of the second ends of the fifth switch unit 134 are respectively connected to the multiple fourth filter units 135 in a one-to-one manner, and the remaining second ends of the fifth switch unit 134 are respectively connected to the multiple auxiliary receiving ports LNA_AUX1, LNA_AUX2, LNA_AUX3, LNA_AUX4.

Based on the RF L-PA Mid device illustrated in FIG. 7 which is an example useful for understanding the invention but outside the scope of the invention as claimed, the transceiving control of any low-band signal can be realized. Exemplary, the implementation of the low-band signal of the N28 frequency band is taken as an example for description.

The transmitting path of the N28 frequency band is as follows:
the transmitting port 4G LB1 RFIN → the first power amplifier 111 → the first filter unit 112 → the multi-channel selection switch 143 → the antenna port LB ANT.

The receiving path of the N28 frequency band is as follows:
the antenna port LB ANT → the multi-channel selection switch 143 → the third filter unit 132 → the first low noise amplifier 131 → the sixth switch unit 136 → the receiving port LNA OUT1.

The insertion loss from the antenna port LB ANT to the antenna on the transmitting path of the N28 frequency band is illustrated in Table 3. From the data in Table 3, it can be seen that the overall insertion loss is about 1.5 dB.

**Table 3 Antenna port LB ANT to antenna insertion loss table**

| | | | | |
|---|---|---|---|---|
| Frequency (MHz) | 699 | 763 | 840 | 915 |
| Loss (dB) | 1.35 | 1.4 | 1.5 | 1.6 |

Compared to the external N28 duplexer used in the related art, the output power of the antenna of the present disclosure is increased by 25.5-24.5=1 dB. In this situation, the output power of the first power amplifier 111 is higher than the requirements in Table 4, with a margin of 0.5 dB. It should be noted that, based on building high-performance N28, more stringent parameters are proposed compared to the 3^{rd} generation partnership project (3GPP) standard, and the index parameters of N28 are illustrated in Table 4. It should be noted that the test bandwidth for the transmitting index in Table 4 is 10 MHz. while the test bandwidth for the receiving index is 5 MHz.

**Table 4 N28 index parameters**

| | Transmitting power | Adjacent channel leakage ratio (ACLR) | Sensitivity |
|---|---|---|---|
| 3GPP | 23 dBm | 32 dBc | -96.5 dBm |
| Research and development index | 25 dBm | 37 dBc | -102 dBm |

In the RF L-PA Mid device illustrated in FIG. 7, for the receiving path of the N28 frequency band, after passing through the third filter unit 132, the N28 directly reaches the first low noise amplifier 131 without passing through the external filter. The first low noise amplifier 131 is a low noise amplifier device added separately for the N28 receiving path, and its parameter and index are illustrated in Table 5.

**Table 5 switch insertion loss table of the first low noise amplifier 131**

| Index | Gain (dB) | Noise factor (NF) |
|---|---|---|
| Parameter | 20 | 2.5 |

According to the link budget formula of the receiving device, the receiving sensitivity of the new scheme is calculated as illustrated in Table 6.

**Table 6 Sensitivity link budget**

| | Gain (dB) | Noise factor (dB) | Total noise factor (dB) |
|---|---|---|---|
| Insertion loss of antenna to RF L-PA Mid device | -1.5 | 1.5 | 1.5 |
| Interior of RF L-PA Mid device (multi-channel selection switch 143) | -0.55 | 0.55 | 2.05 |
| Outside of RF L-PA Mid device (duplexer + matched) | -2.5 | 2.5 | 4.55 |
| Interior of RF L-PA Mid device (SP4T switch) | 0 | 0 | 4.6 |
| Interior of RF L-PA Mid device (first low noise amplifier 131) | 20 | 2.5 | 5.6 |
| Interior of RF L-PA Mid device (3P3T switch)+ wiring +SDR | -10.95 | 10.95 | 5.7 |
| Sensitivity (5MHz) | **-102.3** | | |

Compared to the technical solutions in the related art, the theoretical calculation value of the sensitivity of the RF L-PA Mid device illustrated in FIG. 7 is increased by 0.7 dB, reaching -102.3dBm/5MHz. By comparing and analyzing the data in Table 6 and Table 4, the margin is 0.3 dB. Therefore, the sensitivity index of the RF L-PA Mid device provided based on the embodiment of the present disclosure meets the requirements for building high-performance N28.

Based on the RF L-PA Mid device illustrated in FIG. 8, the transceiving control of any low-band signal can be realized. Exemplary, the implementation of the low-band signal of the N28 frequency band is taken as an example for description.

The transmitting path of the N28 frequency band is as follows:
the transmitting port 4G LB1 RFIN → the first power amplifier 111 → the first filter unit 112 → the second switch unit 142 → the antenna port LB ANT.

The receiving path of the N28 frequency band is as follows:
the antenna port LB ANT → the second switch unit 142 → the third filter unit 132 → the first low noise amplifier 131 → the sixth switch unit 136 → the receiving port LNA OUT1.

The receiving path of the N28 frequency band of the RF L-PA Mid device illustrated in FIG. 8 is the same as that of the RF L-PA Mid device illustrated in FIG. 7, and the N28 frequency band signal in the receiving path of the RF L-PA Mid device illustrated in FIG. 8 is separately connected to the second switch unit 142 (such as the SPDT switch), skipping the SP9T switch. The introduction of SPDT switch is mainly to reduce the insertion loss value of the N28 transmitting path. The specific parameters of the SPDT insertion loss value are illustrated in Table 7.

**Table 7 SPDT switch insertion loss table**

| | | | |
|---|---|---|---|
| Frequency (MHz) | 1000∼1600 | 1600∼3000 | 3000~4500 |
| Loss (dB) | 0.20 | 0.25 | 0.30 |

The insertion loss of the N28 transmitting path in the improved solution is changed to 29.5+0.55-2.5-0.2-1.5=25.85dBm. Compared with the RF L-PA Mid device illustrated in FIG. 7, the power of the improved solution is increased by 25.85-25.5=0.35dB. Compared to the requirements in Table 4, the margin reaches 0.85 dB, which meets the requirements for building the high-performance N28.

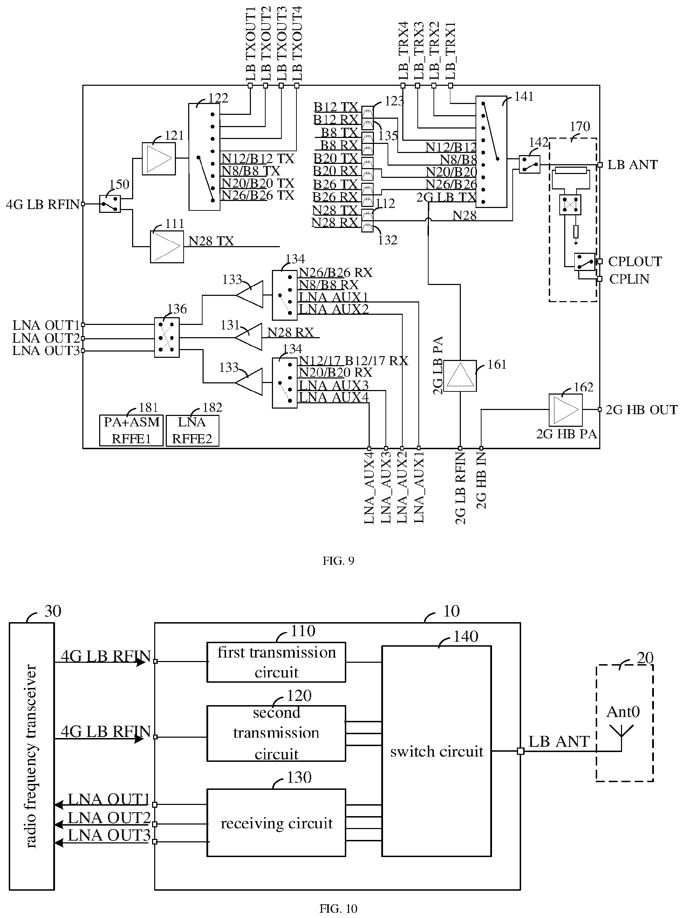

Based on the RF L-PA Mid device illustrated in FIG. 9, the transceiving control of any low-band signal can be realized. Exemplary, the implementation of the low-band signal of the N28 frequency band is taken as an example for description.

The transmitting path of the N28 frequency band is as follows:
the transmitting port 4G LB RFIN → the third switch unit 150 → the first power amplifier 111 → the first filter unit 112 → the second switch unit 142 → the antenna port LB ANT.

The receiving path of the N28 frequency band is as follows:
the antenna port LB ANT → the second switch unit 142 → the third filter unit 132 → the first low noise amplifier 131 → the sixth switch unit 136 → the receiving port LNA OUT1.

In the RF L-PA Mid device as illustrated in FIG. 7, FIG. 8, FIG. 9, the first transmitting circuit (the first power amplifier 111 and the first filter unit 112) and the receiving circuit (the first low noise amplifier 131 and the third filter unit 132) are separately added inside the device for N28, which improves the output power of the N28 frequency band signal and the sensitivity performance of the N28 frequency band signal, and the communication performance of the N28 frequency band signal is high.

As illustrated in FIG. 7, FIG. 8, FIG. 9, in one embodiment, the RF L-PA Mid device is further configured with a second low-frequency transmitting port 2G LB RFIN, a high-frequency transmitting port 2G HB IN, and a high-frequency output port 2G HB OUT. The RF L-PA Mid device further includes a third power amplifier 161 and a fourth power amplifier 162. Specifically, an input terminal of the third power amplifier 161 is connected to the second low-frequency transmitting port 2G LB RFIN, an output terminal of the third power amplifier 161 is connected to one first end of the switch circuit, and the third power amplifier 161 is configured to perform amplification processing on the received 2G low-band signal. The low-band signal is the 4G signal and the 5G signal. An input terminal of the fourth power amplifier 162 is connected to the high-frequency transmitting port 2G HB IN, the output terminal of the third power amplifier 161 is connected to the high-frequency output port 2G HB OUT, and the fourth power amplifier 162 is configured to perform amplification processing on the received 2G high-frequency signal.

The RF L-PA Mid device in the embodiment can achieve transmitting control of the low-band signal of the 2G signal by setting the third power amplifier 161. The low-band signal of the 2G signal may include the 900M frequency band of global system for mobile communications (GSM) standard, the 800M frequency band of code division multiple access (CDMA) standard, etc. By setting the fourth power amplifier 162, the transmitting control of the high-frequency signal of the 2G signal can be achieved. The low-band signal of the 2G signal may include the 900M frequency band of GSM standard, the 800M frequency band of CDMA standard, etc.

As illustrated in FIG. 7, FIG. 8, FIG. 9, in one embodiment, the RF L-PA Mid device is further configured with a coupling output port CPLOUT, and the RF L-PA Mid device further includes a coupling circuit 170 disposed between the switch circuit 140 and the antenna port LB ANT in the RF path. The coupling circuit 170 is configured to couple the low-band signals in the RF path to output a coupled signal through the coupling output port CPLOUT.

Specifically, the coupled signal may be used to measure the forward coupled power and reverse coupled power of the low-band signal. The coupling circuit 170 includes an input terminal, an output terminal, and a coupling terminal. The input terminal of the coupling circuit 170 is coupled to the switch circuit 140, the output terminal of the coupling circuit 170 is coupled to the antenna port LB ANT, and the coupling terminal is configured to couple the middle-frequency signal received by the input terminal and output the coupled signal to the coupling output port CPLOUT. The coupled signal includes a forward coupled signal and a reverse coupled signal. Based on the forward coupled signal output from the coupling terminal, the forward power information of the low-band signal can be detected. Based on the reverse coupled signal output from the coupling terminal, the reverse power information of the low-band signal can be detected correspondingly, and the detection mode is defined as the reverse power detection mode.

In the embodiment, the RF L-PA Mid device is equipped with only one coupling output port CPLOUT, due to the fact that the low-band signals of the multiple frequency bands are not transmitted simultaneously, one coupling output port CPLOUT can also meet communication needs, the complexity of RF wiring inside the RF L-PA Mid device is reduced, and the isolation performance of each wiring of the RF L-PA Mid device can be improved.

As illustrated in FIG. 7, FIG. 8, FIG. 9, in one embodiment, the RF L-PA Mid device further includes a first control unit 181 and a second control unit 182. Specifically, the first control unit 181 is individually connected to the respective switch units and the respective power amplifiers, for example, the first switch unit 141, the second switch unit 142, ... , the first power amplifier 111, and the third power amplifier 161; and the first control unit 181 is configured to control the on/off of the respective switch units, and further configured to control the working status of the respective power amplifiers. The second control unit 182 may be connected to the respective low noise amplifiers and configured to adjust the gain coefficients of the respective low noise amplifiers, so as to adjust the link loss of the receiving path of each middle-frequency signal and each low-band signal, thereby improving the sensitivity of the receiving path of each middle-frequency signal and each low-band signal.

Specifically, the first control unit 181 and the second control unit 182 may be a mobile industry processor interface (MIPI) - RF front end control interface (RFFE) control unit or a RFFE control unit, which conforms the control protocol of the RFFE bus.

It should be noted that in some embodiments of the present disclosure, the control logic of each switch unit matches the control logic of the first control unit 181. In some embodiments of the present disclosure, and the specific types of each switch unit, the first control unit 181, and the second control unit 182 are not further limited.

An embodiment of the present disclosure provides a radio frequency transceiving system. As illustrated in FIG. 10, in one embodiment, the RF transceiving system includes the RF L-PA Mid device 10 as described in any of the previous embodiments, an antenna group 20, and a RF transceiver 30. The antenna group 20 includes a first antenna Ant0, and the first antenna Ant0 is connected to the antenna port LB ANT of the RF L-PA Mid device 10. The RF transceiver 30 is individually connected to the transmitting port 4G LB RFIN and the receiving port LNA OUT of the RF L-PA Mid device 10.

In one embodiment, the first antenna Ant0 may be formed using any suitable type of antenna. In an illustrated embodiment, the first antenna Ant0 may include an antenna having a resonating element formed of at least one of an array antenna structure, a loop antenna structure, a patch antenna structure, a slot antenna structure, a helical antenna structure, a strip antenna, a monopole antenna, a dipole antennas, etc. Different types of antennas may be used for different frequency bands and frequency band combinations. In the embodiment of the present disclosure, the type of the first antenna Ant0 is not further limited.

The RF L-PA Mid device 10 in the above RF transceiving system includes the first transmitting circuit 110, the second transmitting circuit 120, the receiving circuit 130, and the switch circuit 140. In other words, the first transmitting circuit and the receiving circuit for processing the preset low-frequency signal (the N28 frequency band signal) are integrated in the RF L-PA Mid device 10. Compared to the devices in the related art that use the external duplexer to support the transceiving processing of the preset low-frequency signal, the insertion loss of the transceiving link of the device of the present disclosure can be reduced, the output power of the device of the present disclosure to the preset low-frequency signal is improved, and the sensitivity performance of the preset low-frequency signal is improved, so that the communication performance of the device of the disclosure can be improved. In addition, compared to the devices in the related art, the integration of the device of the disclosure can be improved and the area of the device of the disclosure can be saved, which is conducive to the miniaturization of the device. Moreover, the logic control and power supply network laying of the switch circuit 140 are provided by the RF L-PA Mid device itself, which will not affect other elements of the RF PA Mid RF device and can also reduce costs.

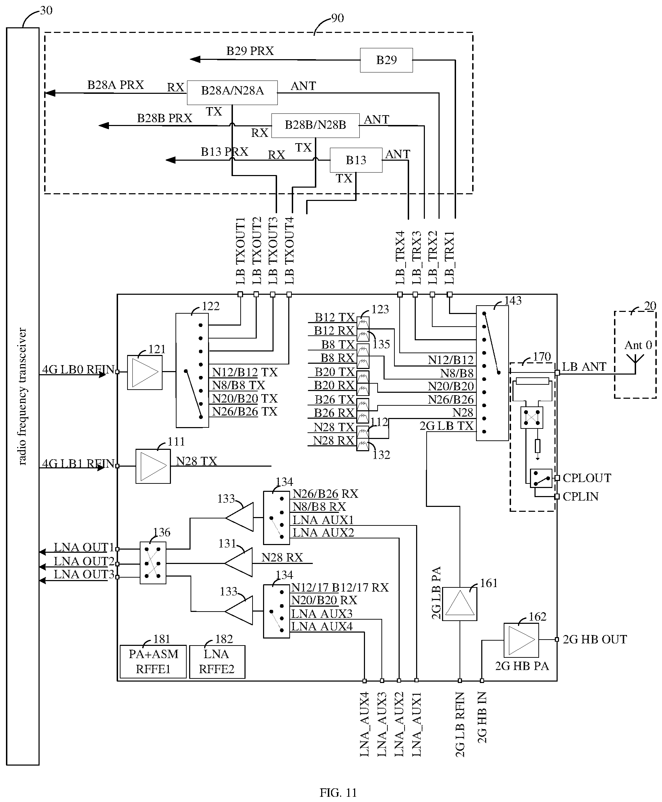

As illustrated in FIG. 11, in one embodiment, the RF transceiving system includes the RF L-PA Mid device 10 as described in any of the embodiments of FIGS. 7-9. The RF transceiving system further includes a switching circuit 90. Specifically, the switching circuit 90 is individually connected to the multiple auxiliary transmitting ports LB TXOUT1, LB TXOUT2, LB TXOUT3, LB TXOUT4, the multiple auxiliary transceiving ports LB_TRX1, LB_TRX2, LB_TRX3, LB_TRX4, and the multiple auxiliary receiving ports LNA_AUX1, LNA_AUX2, LNA_AUX3, LNA_ AUX4 of the RF L-PA Mid device 10.

In one embodiment, the switching circuit may include multiple duplexers. The switching circuit of the RF transceiving system is connected to the auxiliary transmitting ports, the auxiliary transceiving ports, and the auxiliary receiving ports of the RF L-PA Mid device 10, which can support the receiving and transmitting of signals in the built-in and external frequency bands. The specific information is illustrated in Table 8 as follows.

| Standard | Built-in frequency band | External frequency band |
|---|---|---|
| GSM | 850/900/1800/1900 | --- |
| WCDMA | B1/3/4/5 | B2 |
| LTE | B1/3/4/5/7/8/12/17/18/19/20/26/28/34/38/39/40/41 | B2/13/25 |

The RF L-PA Mid device 10 in the above RF transceiving system includes the first transmitting circuit 110, the second transmitting circuit 120, the receiving circuit 130, and the switch circuit 140. In other words, the first transmitting circuit and the receiving circuit for processing the preset low-frequency signal (the N28 frequency band signal) are integrated in the RF L-PA Mid device 10. Compared to the devices in the related art that use the external duplexer to support the transceiving processing of the preset low-frequency signal, the insertion loss of the transceiving link of the device of the present disclosure can be reduced, the output power of the device of the present disclosure to the preset low-frequency signal is improved, and the sensitivity performance of the preset low-frequency signal is improved, so that the communication performance of the device of the disclosure can be improved. In addition, compared to the devices in the related art, the integration of the device of the disclosure can be improved and the area of the device of the disclosure can be saved, which is conducive to the miniaturization of the device. Moreover, the logic control and power supply network laying of the switch circuit 140 are provided by the RF L-PA Mid device itself, which will not affect other elements of the RF PA Mid RF device and can also reduce costs.

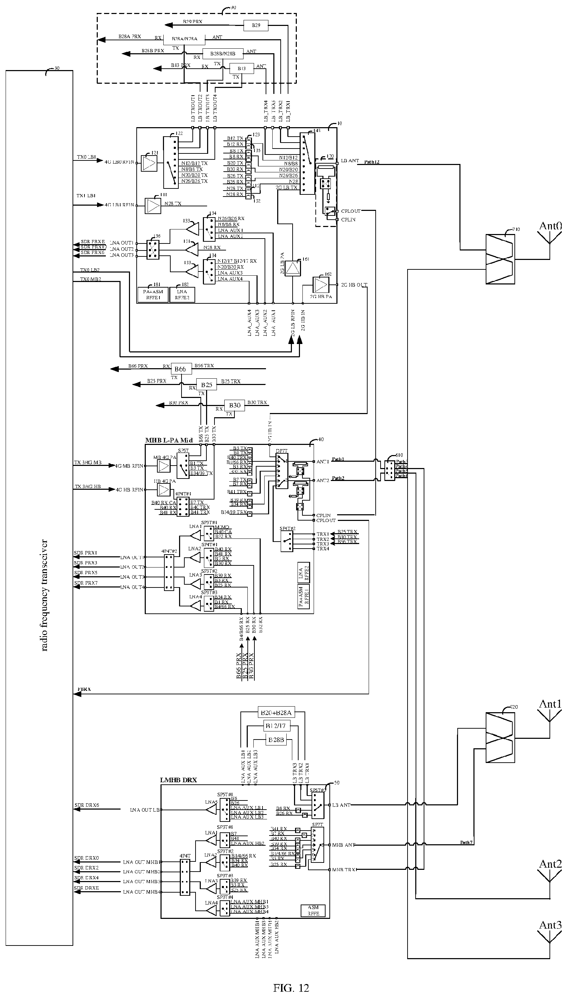

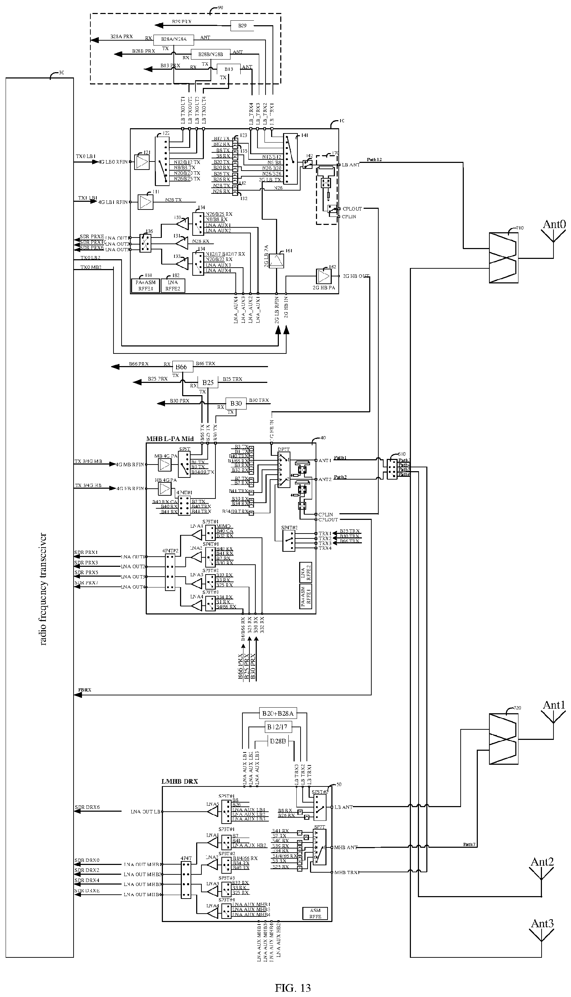

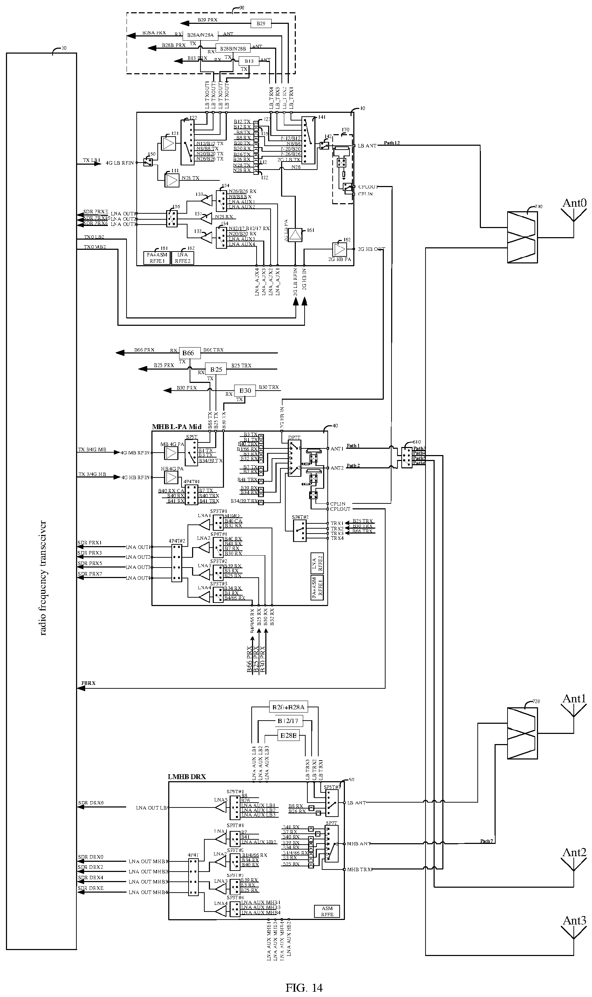

As illustrated in FIG. 12 through FIG. 14, in one embodiment, the antenna group 20 further includes a second antenna Ant1, a third antenna Ant2, and a fourth antenna Ant3. It should be noted that the radiation frequency bands and antenna types of the second antenna Ant1, the third antenna Ant2 and the fourth antenna Ant3 may refer to the first antenna Ant0, which will not be repeated here.

The RF transceiving system further includes a transceiving module 40, a receiving module 50, a switch module, and a combiner module. Specifically, the transceiving module 40 is configured with a first antenna port ANT1 and a second antenna port ANT2 and is configured to support the transceiving processing and amplification processing of multiple middle-band signals and multiple high-band signals. Specifically, multiple power amplifiers, low noise amplifiers, filters, switches, and other components are integrated in the transceiving module 40. The transceiving module 40 can achieve the transceiving processing of the multiple middle-band signals and multiple high-band signals. Specifically, the transceiving module 40 may be an MHB L-PA Mid device, that is, a middle and high band PA Mid with LNA. The multiple middle-band signals may at least include signals of frequency bands such as B4, B66, B1, B25, B34, B39, B3, B30, etc. The multiple high-band signals may include signals of frequency bands such as B7, B40, and B41.

The receiving module 50 is configured with a low-band antenna port LB ANT, a middle and high band antenna port MHB ANT, and a middle and high band transceiving port MHB TRX1, and the receiving module 50 is configured to support diversity reception and amplification processing of the multiple low-band signals, the multiple middle-band signals, and the multiple high-band signals. Specifically, multiple low noise amplifiers, filters, switches, and other components are integrated in the receiving module 50. The receiving module 50 may be an LMHB DRX device, that is, a diversity receiving module 50 that can support for low, middle, and high frequency bands. The receiving module 50 can achieve the receiving process of 4G signals of multiple low, middle, and high frequency bands, among which the low, middle, and high frequency band signals may at least include B4, B66, B1, B25, B3, B39, B30, B7, B40, B41, B8, B26, B20, B28A, B28B, B12, B17, etc.

The switch module is individually connected to the first antenna port ANT1, the second antenna port ANT2, the low-band antenna port LB ANT, the third antenna Ant2, and the fourth antenna Ant3. The multiple first ends of the combiner module are respectively connected to the antenna port LB ANT and the switch module in a one-to-one manner, the multiple first ends of the combiner module are respectively connected to the antenna port LB ANT, the middle-band antenna port, and the high-band antenna port. Two second ends of the combiner module are respectively connected to the first antenna Ant0 and the second antenna Ant1 in a one-to-one manner.

Specifically, the switch module may include a seventh switch unit 610. The combiner module includes a first combiner 710 and a second combiner 720. Specifically, the first combiner 710 and the second combiner 720 may both be dual-frequency combiners 70. The seventh switch unit 610 includes two first ends and four second ends. In an illustrated embodiment, the seventh switch unit 610 may be a DP4T switch. Specifically, the two first ends of the DP4T switch are respectively connected to the first antenna port ANT1 and the second antenna port ANT2 in a one-to-one manner, one of the second ends of the DP4T switch is connected to one first end of the first combiner 710, another first end of the first combiner 710 is connected to the antenna port LB ANT of the RF L-PA Mid device 10, and one second end of the first combiner 710 is connected to the first antenna Ant0: another second end of the DP4T switch is connected to the middle and high band transceiving port MHB TRX1; still another second end of the DP4T switch is connected to the third antenna Ant2; and even still another second end of the DP4T switch is connected to the fourth antenna Ant3. The low-band antenna port LB ANT and the middle and high band antenna port MHB ANT of the receiving module 50 are respectively connected to the second antenna Ant1 through the second combiner 720.

In the RF transceiving system according to the embodiment, compared to the devices in the related art that use the external diplexer to support the transceiving processing of the preset low-frequency signal (N28 frequency band signal), the insertion loss of the transceiving link of the device of the present disclosure can be reduced, the output power of the device to preset low-frequency signal can be improved, the sensitivity performance of the preset low-frequency signal can be improved, so that the communication performance of the device is improved. It can also be used to support the 1T4R function of the channel sounding reference signal (SRS) of the middle and high band RF signals.

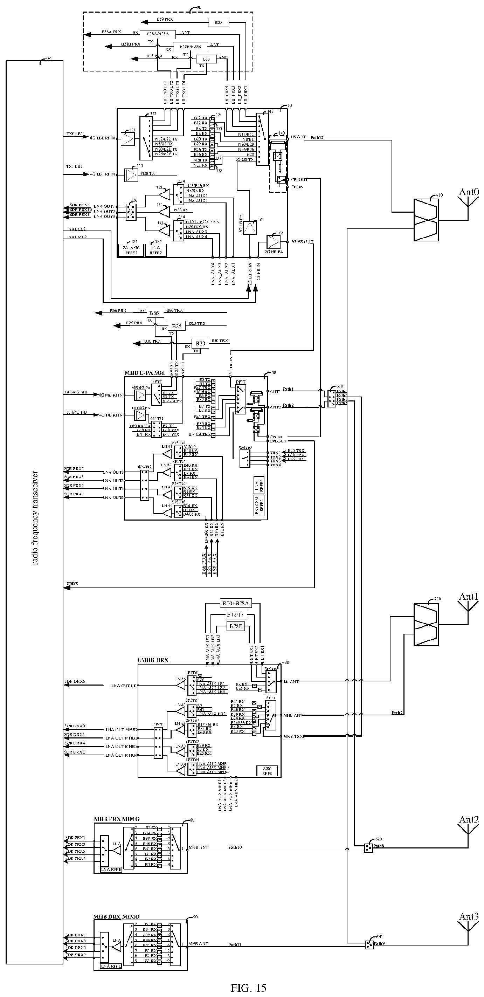

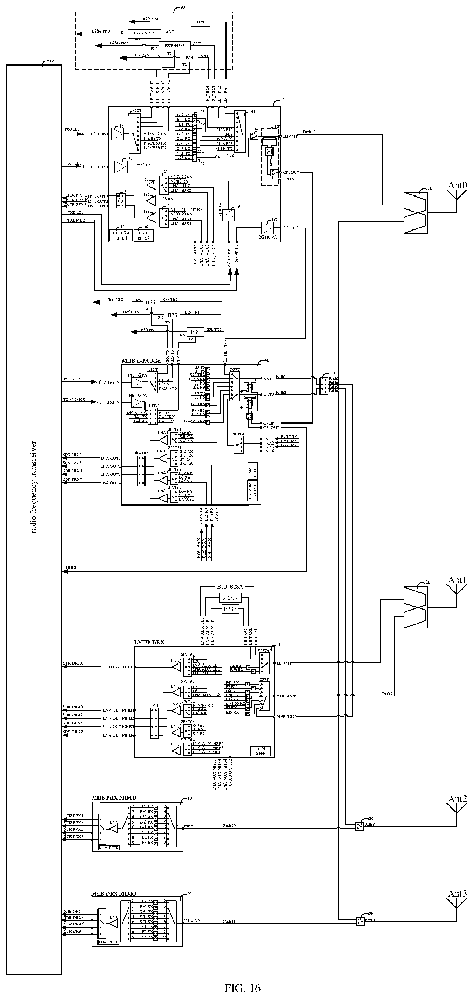

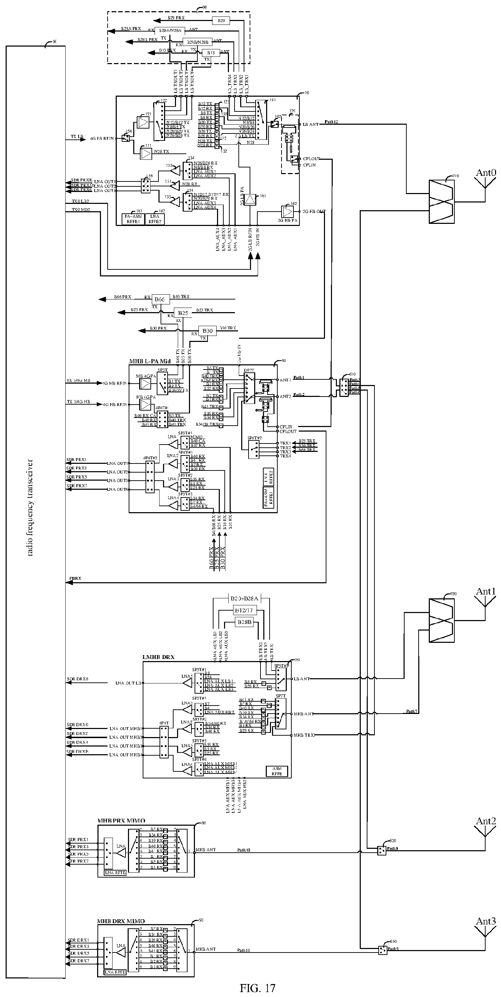

As illustrated in FIG. 15 through FIG. 17, in one embodiment, the RF transceiving system further includes a first multiple-input multiple-output (MIMO) receiving module 80 and a second MIMO receiving module 90. Specifically, the first MIMO receiving module 80 is connected to the RF transceiver 30 and the switch module, respectively, the first MIMO receiving module 80 is configured to support the primary reception and amplification processing of the multiple middle-band signals and the multiple high-band signals. The second MIMO receiving module 90 is individually connected to the RF transceiver 30 and the switch module to support diversity reception and amplification processing of the multiple middle-band signals and the multiple high-band signals. Specifically, multiple RF signals of the middle and high frequency bands may at least include frequency bands such as B1, B3, B25, B34, B66, B39, B30, B7, B40, and B41.

In an illustrated embodiment, the switch module further includes an eighth switch unit 620 and a ninth switch unit 630. Specifically, one first end of the eighth switch unit 620 is connected to the still another second end of the seventh switch unit 610, the other first end of the eighth switch unit 620 is connected to the first MIMO receiving module 80, and a second end of the eighth switch unit 620 is connected to the third antenna Ant2. One first end of the ninth switch unit 630 is connected to the even still another second end of the seventh switch unit 610, the other first end of the ninth switch unit 630 is connected to the second MIMO receiving module 90, and a second end of the ninth switch unit 630 is connected to the fourth antenna Ant3.

In the RF transceiving system illustrated in FIG. 15 through FIG. 17, compared to the devices in the related art that use the external diplexer to support the transceiving processing of the preset low-frequency signal (N28 frequency band signal), the insertion loss of the transceiving link of the device of the present disclosure can be reduced, the output power of the device to preset low-frequency signal can be improved, the sensitivity performance of the preset low-frequency signal can be improved, so that the communication performance of the device is improved. It can also be used to support the 1T4R function of the SRS of the middle and high band RF signals. In addition, 4*4 MIMO functions of the multiple middle and high band signals can be supported, so that the communication frequency band of the RF transceiving system is expanded and the communication performance of the RF transceiving system is improved.

An embodiment of the present disclosure also provides a communication device, and the communication device is provided with the RF transceiving system as described in any of the above embodiments. By setting the RF transceiving system on the communication device, compared to the devices in the related art that use the external duplexer to support the transceiving processing of the preset low-frequency signal, the insertion loss of the transceiving link of the device of the present disclosure can be reduced, the output power of the device to preset low-frequency signal can be increased, and the sensitivity performance of the preset low-frequency signal can improved, so that the communication performance of the device is improved. In addition, compared to the devices in the related art, the integration of the device of the disclosure can be improved and the area of the device of the disclosure can be saved, which is conducive to the miniaturization of the device. Moreover, the logic control and power supply network laying of the switch circuit are provided by the RF L-PA Mid device itself, which will not affect other elements of the RF PA Mid RF device and can also reduce costs.

The above embodiments merely illustrate several embodiments of the present disclosure, and their descriptions are more specific and detailed, but cannot be construed as limiting the scope of the present disclosure. It should be pointed out that for those skilled in the art, several modifications and improvements can be made without departing from the concept of the present disclosure, which all should fall within the scope of protection of the present disclosure. Therefore, the scope of protection of present disclosure shall be subject to the appended claims.

## Claims

1. A radio frequency low noise amplifier plus power amplifier modules with integrated duplexers (L-PA Mid) device (10), configured with a transmitting port (4G LB RFIN), an antenna port (LB ANT), and a plurality of receiving ports (LNA OUT1, LNA OUT2, LNA OUT3); the radio frequency L-PA Mid device (10) comprising:
a first transmitting circuit (110), connected to the transmitting port (4G LB RFIN) and configured to perform amplification and filtering processing on a preset low-frequency signal received by the transmitting port (4G LB RFIN);
a second transmitting circuit (120), connected to the transmitting port (4G LB RFIN) and configured to perform amplification and filtering processing on a plurality of low-band signals received by the transmitting port (4G LB RFIN), wherein the plurality of low-band signals comprise signals at frequency bands of B8, B12, B20, B26, N8, N20, N26, B28, B13, and B19;
a receiving circuit (130), connected to the plurality of receiving ports (LNA OUT1, LNA OUT2, LNA OUT3) and configured to perform amplification and filtering processing on the preset low-frequency signal and the plurality of low-band signals; and
a switch circuit (140), wherein a plurality of first ends of the switch circuit (140) are respectively connected to the first transmitting circuit (110), the second transmitting circuit (120) and the receiving circuit (130), a second end of the switch circuit (140) is connected to the antenna port (LB ANT), and the switch circuit (140) is configured to make radio frequency paths respectively between the first transmitting circuit (110) and the antenna port (LB ANT), between the second transmitting circuit (120) and the antenna port (LB ANT), and between the receiving circuit (130) and the antenna port (LB ANT) be selectively switched on; and the preset low-frequency signal and the plurality of low-band signals have different frequency ranges;
**characterized in that**,
the preset low-frequency signal on which the first transmitting circuit performs amplification and filtering processing is a signal of N28 frequency band, and the plurality of low-band signals on which the second transmitting circuit performs amplification and filtering processing comprise signals at frequency bands of B8, B12, B20, B26, N8, N20, N26, B28, B13, and B19; and
the switch circuit (140) comprises:
a first switch unit (141), comprising a plurality of first ends and one second end, wherein the plurality of first ends of the first switch unit (141) are respectively connected to the second transmitting circuit (120) and the receiving circuit (130); and
a second switch unit (142), comprising two first ends and one second end; wherein one of the two first ends of the second switch unit (142) is connected to the second end of the first switch unit (141), the other one of the two first ends of the second switch unit (142) is connected to the first transmitting circuit (110), and the second end of the second switch unit (142) is connected to the antenna port (LB ANT).

2. The radio frequency L-PA Mid device (10) according to claim 1, further comprising:
a third switch unit (150), wherein a first end of the third switch unit (150) is connected to the transmitting port (4G LB RFIN), and two second ends of the third switch unit (150) are respectively connected to an input terminal of the first transmitting circuit (110) and an input terminal of the second transmitting circuit (120).

3. The radio frequency L-PA Mid device (10) according to claim 1, wherein a number of the transmitting port (4G LB RFIN) is multiple, and the multiple transmitting ports (4G LB RFIN) respectively serves as a first transmitting port (4G LB1 RFIN) and a second transmitting port (4G LB0 RFIN);
wherein an input terminal of the first transmitting circuit (110) is connected to the first transmitting port (4G LB1 RFIN), and an input terminal of the second transmitting circuit (120) is connected to the second transmitting port (4G LB0 RFIN).

4. The radio frequency L-PA Mid device (10) according to any one of claims 1 to 3, wherein the first transmitting circuit (110) comprises:
a first power amplifier (111), wherein an input terminal of the first power amplifier (111) is connected to the transmitting port (4G LB RFIN), and the first power amplifier (111) is configured to perform the amplification processing on the received preset low-frequency signal; and
a first filter unit (112), connected to an output terminal of the first power amplifier (111) and the switch circuit (140) individually and configured to perform the filtering processing on the preset low-frequency signal;
wherein the second transmitting circuit (120) comprises:
a second power amplifier (121), wherein an input terminal of the second power amplifier (121) is connected to the transmitting port (4G LB RFIN);
a fourth switch unit (122), wherein a first end of the fourth switch unit (122) is connected to an output terminal of the second power amplifier (121);
a plurality of second filter units (123), wherein input terminals of the plurality of second filter units (123) are respectively connected to second ends of the fourth switch unit (122), output terminals of the plurality of second filter units (123) are individually connected to the switch circuit (140), the second filter units (123) are configured to perform the filtering processing on the low-band signals, and frequency bands of the low-band signals respectively output by the plurality of second filter units (123) are different.

5. The radio frequency L-PA Mid device (10) according to any one of claims 1 to 4, wherein the receiving circuit (130) comprises:
a first low noise amplifier (131), wherein an output terminal of the first low noise amplifier (131) is connected to one of the plurality of receiving ports (LNA OUT1, LNA OUT2, LNA OUT3), and the first low noise amplifier (131) is configured to perform the amplification processing on the received preset low-frequency signal;
a third filter unit (132), connected to an input terminal of the first low noise amplifier (131) and the switch circuit (140) individually, and configured to perform the filtering processing on the received preset low-frequency signal;
at least one second low noise amplifier (133), wherein an output terminal of each of the at least one second low noise amplifier (133) is correspondingly connected to one of the plurality of receiving ports (LNA OUT1, LNA OUT2, LNA OUT3);
a fifth switch unit (134), wherein each of first ends of the fifth switch unit (134) is connected to an input terminal of each of the at least one second low noise amplifier (133) in a one-to-one manner;
a plurality of fourth filter units (135), wherein an input terminal of each of the plurality of fourth filter units (135) is connected to the switch circuit (140), an output terminal of each of the plurality of fourth filter units (135) is connected to a corresponding one second end of the fifth switch unit (134), the plurality of fourth filter units (135) are configured to perform the filtering processing on the received low-band signals, and frequency bands of the low-band signals respectively output by the plurality of fourth filter units (135) are different; and
a sixth switch unit (136), wherein a plurality of first ends of the sixth switch unit (136) are respectively connected to the plurality of receiving ports (LNA OUT1, LNA OUT2, LNA OUT3) in a one-to-one manner, and a plurality of second ends of the sixth switch unit (136) are respectively connected to the output terminal of the first low noise amplifier (131) and the output terminal of each of the at least one second low noise amplifier (133) in a one-to-one manner.

6. The radio frequency L-PA Mid device (10) according to any one of claims 1 to 5, wherein the radio frequency L-PA Mid device (10) is further configured with a plurality of auxiliary transmitting ports (LB TXOUT1, LB TXOUT2, LB TXOUT3, LB TXOUT4), a plurality of auxiliary transceiving ports (LB_TRX1, LB_TRX2, LB_TRX3, LB_TRX4) and a plurality of auxiliary receiving ports (LNA_AUX1, LNA_AUX2, LNA_AUX3, LNA_AUX4), which are configured to be connected to an external switching circuit; the plurality of auxiliary transmitting ports (LB TXOUT1, LB TXOUT2, LB TXOUT3, LB TXOUT4) are connected to the second transmitting circuit (120), the plurality of auxiliary transceiving ports (LB_TRX1, LB_TRX2, LB_TRX3, LB_TRX4) are connected to the switch circuit (140), and the plurality of auxiliary receiving ports (LNA_AUX1, LNA_AUX2, LNA_AUX3, LNA_AUX4) are connected to the receiving circuit (130).

7. The radio frequency L-PA Mid device (10) according to any one of claims 1 to 5, wherein the radio frequency L-PA Mid device (10) is further configured with a coupling output port (CPLOUT), and the radio frequency L-PA Mid device (10) further comprises:
a coupling circuit (170), disposed in a radio frequency path between the switch circuit (140) and the antenna port (LB ANT) and configured to couple the low-band signals in the radio frequency path between the switch circuit (140) and the antenna port (LB ANT) to output a coupled signal through the coupling output port (CPLOUT).

8. A radio frequency transceiving system, comprising:
the radio frequency L-PA Mid device (10) according to any one of claims 1 to 7;
an antenna group (20), comprising a first antenna (Ant0) connected to the antenna port (LB ANT) of the radio frequency L-PA Mid device (10); and
a radio frequency transceiver (30), connected to the transmitting port (4G LB RFIN) and the plurality of receiving ports (LNA OUT1, LNA OUT2, LNA OUT3) of the radio frequency L-PA Mid device (10) individually.

9. The radio frequency transceiving system according to claim 8, wherein the radio frequency L-PA Mid device (10) is configured with a plurality of auxiliary transmitting ports (LB TXOUT1, LB TXOUT2, LB TXOUT3, LB TXOUT4), a plurality of auxiliary transceiving ports (LB_TRX1, LB_TRX2, LB_TRX3, LB_TRX4), and a plurality of auxiliary receiving ports (LNA_AUX1, LNA_AUX2, LNA_AUX3, LNA_AUX4); the radio frequency transceiving system further comprises:
a switching circuit (90), connected to the plurality of auxiliary transmitting ports (LB TXOUT1, LB TXOUT2, LB TXOUT3, LB TXOUT4), the plurality of auxiliary transceiving ports (LB_TRX1, LB_TRX2, LB_TRX3, LB_TRX4) and the plurality of auxiliary receiving ports (LNA_AUX1, LNA_AUX2, LNA_AUX3, LNA_AUX4) individually, and configured to support filtering processing on the plurality of low-band signals.

10. The radio frequency transceiving system according to claim 8, wherein the antenna group (20) further comprises a second antenna (Ant1), a third antenna (Ant2) and a fourth antenna (Ant3); and the radio frequency transceiving system further comprises:
a transceiving module (40), configured with a first antenna port (ANT1) and a second antenna port (ANT2), and configured to support transceiving and amplification processing of a plurality of middle-band signals and a plurality of high-band signals;
a receiving module (50), configured with a low-band antenna port (LB ANT), a middle and high band antenna port (MHB ANT), and a middle and high band transceiving port (MHB TRX1), wherein the receiving module (50) is configured to support diversity reception and amplification processing of the plurality of low-band signals, the plurality of middle-band signals, and the plurality of high-band signals;
a switch module, connected to the first antenna port (ANT1), the second antenna port (ANT2), the low-band antenna port (LB ANT), the third antenna (Ant2) and the fourth antenna (Ant3) individually; and
a combiner module, wherein a plurality of first ends of the combiner module are respectively connected to the antenna port (LB ANT) of the radio frequency L-PA Mid device (10), the middle and high band antenna port (MHB ANT), and the middle and high band transceiving port (MHB TRX1), and two second ends of the combiner module are respectively connected to the first antenna (Ant0) and the second antenna (Ant1) in a one-to-one manner;
wherein the switch module comprises: a seventh switch unit (610); the combiner module comprises a first combiner (710) and a second combiner (720); the seventh switch unit (610) comprises two first ends and four second ends;
wherein the two first ends of the seventh switch unit (610) are respectively connected to the first antenna port (ANT1) and the second antenna port (ANT2) in a one-to-one manner; one second end of the four second ends of the seventh switch unit (610) is connected to a first end of the first combiner (710), another first end of the first combiner (710) is connected to the antenna port (LB ANT) of the radio frequency L-PA Mid device (10), and a second end of the first combiner (710) is connected to the first antenna (Ant0); another second end of the four second ends of the seventh switch unit (610) is connected to the middle and high band transceiving port (MHB TRX1); still another second end of the four second ends of the seventh switch unit (610) is connected to the third antenna (Ant2); even still another second end of the four second ends of the seventh switch unit (610) is connected to the fourth antenna (Ant3); the low-band antenna port (LB ANT) and the middle and high band antenna port (MHB ANT) of the receiving module (50) are individually connected to the second antenna (Ant1) through the second combiner (720).

11. The radio frequency transceiving system according to claim 10, further comprising:
a first multiple-input multiple-output, MIMO, receiving module (80), connected to the radio frequency transceiver (30) and the switch module individually and configured to support primary reception and amplification processing of a plurality of middle-band signals and a plurality of high-band signals; and
a second MIMO receiving module (91), connected to the radio frequency transceiver (30) and the switch module individually and configured to support diversity reception and amplification processing of a plurality of middle-band signals and a plurality of high-band signals;
wherein the switch module further comprises:
an eighth switch unit (620), wherein a first end of the eighth switch unit (620) is connected to the still another second end of the seventh switch unit (610), another first end of the eighth switch unit (620) is connected to the first MIMO receiving module (80), and a second end of the eighth switch unit (620) is connected to the third antenna (Ant2); and
a ninth switch unit (630), wherein a first end of the ninth switch unit (630) is connected to the even still another second end of the seventh switch unit (610), another first end of the ninth switch unit (630) is connected to the second MIMO receiving module (91), and the second end of the ninth switch unit (630) is connected to the fourth antenna (Ant3).

12. A communication device, comprising:
the radio frequency transceiving system according to any one of claims 8 to 11.

## Patentansprüche

1. Rauscharmer Hochfrequenzverstärker plus Leistungsverstärkermodule mit Integrierte-Duplexer- (L-PA Mid) Vorrichtung (10), konfiguriert mit einem Sendeport (4G LB RFIN), einem Antennenport (LB ANT) und einer Vielzahl von Empfangsports (LNA OUT1, LNA OUT2, LNA OUT3); wobei die Hochfrequenz-L-PA-Mid-Vorrichtung (10) umfasst:
eine erste Sendeschaltung (110), die mit dem Sendeport (4G LB RFIN) verbunden und konfiguriert ist, eine Verstärkungs- und Filterverarbeitung an einem voreingestellten Niederfrequenzsignal durchzuführen, das vom Sendeport (4G LB RFIN) empfangen wird;
eine zweite Sendeschaltung (120), die mit dem Sendeport (4G LB RFIN) verbunden und konfiguriert ist, eine Verstärkungs- und Filterverarbeitung an einer Vielzahl von Tiefbandsignalen durchzuführen, die vom Sendeport (4G LB RFIN) empfangen werden, wobei die Vielzahl von Tiefbandsignalen Signale in den Frequenzbändern B8, B12, B20, B26, N8, N20, N26, B28, B13 und B19 umfasst;
eine Empfangsschaltung (130), die mit der Vielzahl von Empfangsports (LNA OUT1, LNA OUT2, LNA OUT3) verbunden und konfiguriert ist, eine Verstärkungs- und Filterverarbeitung an dem voreingestellten Niederfrequenzsignal und der Vielzahl von Tiefbandsignalen durchzuführen; und
eine Schalterschaltung (140), wobei eine Vielzahl erster Enden der Schalterschaltung (140) jeweils mit der ersten Sendeschaltung (110), der zweiten Sendeschaltung (120) und der Empfangsschaltung (130) verbunden ist, ein zweites Ende der Schalterschaltung (140) mit dem Antennenport (LB ANT) verbunden ist und die Schalterschaltung (140) konfiguriert ist, Hochfrequenzpfade jeweils zwischen der ersten Sendeschaltung (110) und dem Antennenport (LB ANT), zwischen der zweiten Sendeschaltung (120) und dem Antennenport (LB ANT) und zwischen der Empfangsschaltung (130) und dem Antennenport (LB ANT) selektiv einzuschalten; und das voreingestellte Niederfrequenzsignal und die Vielzahl von Tiefbandsignalen unterschiedliche Frequenzbereiche aufweisen;
**dadurch gekennzeichnet, dass**
das voreingestellte Niederfrequenzsignal, an dem die erste Sendeschaltung eine Verstärkungs- und Filterverarbeitung durchführt, ein Signal des N28-Frequenzbandes ist, und die Vielzahl von Tiefbandsignalen, an denen die zweite Sendeschaltung eine Verstärkungs- und Filterverarbeitung durchführt, Signale in den Frequenzbändern B8, B12, B20, B26, N8, N20, N26, B28, B13 und B19 umfasst; und
die Schalterschaltung (140) umfasst:
eine erste Schaltereinheit (141), die eine Vielzahl von ersten Enden und ein zweites Ende umfasst, wobei die Vielzahl von ersten Enden der ersten Schaltereinheit (141) jeweils mit der zweiten Sendeschaltung (120) und der Empfangsschaltung (130) verbunden ist; und
eine zweite Schaltereinheit (142), die zwei erste Enden und ein zweites Ende umfasst; wobei eines der zwei ersten Enden der zweiten Schaltereinheit (142) mit dem zweiten Ende der ersten Schaltereinheit (141) verbunden ist, das andere der zwei ersten Enden der zweiten Schaltereinheit (142) mit der ersten Sendeschaltung (110) verbunden ist und das zweite Ende der zweiten Schaltereinheit (142) mit dem Antennenport (LB ANT) verbunden ist.

2. Hochfrequenz-L-PA-Mid-Vorrichtung (10) nach Anspruch 1, weiter umfassend:
eine dritte Schaltereinheit (150), wobei ein erstes Ende der dritten Schaltereinheit (150) mit dem Sendeport (4G LB RFIN) verbunden ist und zwei zweite Enden der dritten Schaltereinheit (150) jeweils mit einem Eingangsanschluss der ersten Sendeschaltung (110) und einem Eingangsanschluss der zweiten Sendeschaltung (120) verbunden sind.

3. Hochfrequenz-L-PA-Mid-Vorrichtung (10) nach Anspruch 1, wobei eine Anzahl von Sendeports (4G LB RFIN) mehrfach ist und die mehreren Sendeports (4G LB RFIN) jeweils als erster Sendeport (4G LB1 RFIN) und zweiter Sendeport (4G LB0 RFIN) dienen;
wobei ein Eingangsanschluss der ersten Sendeschaltung (110) mit dem ersten Sendeport (4G LB1 RFIN) verbunden ist und ein Eingangsanschluss der zweiten Sendeschaltung (120) mit dem zweiten Sendeport (4G LB0 RFIN) verbunden ist.

4. Hochfrequenz-L-PA-Mid-Vorrichtung (10) nach einem der Ansprüche 1 bis 3, wobei die erste Sendeschaltung (110) umfasst:
einen ersten Leistungsverstärker (111), wobei ein Eingangsanschluss des ersten Leistungsverstärkers (111) mit dem Sendeport (4G LB RFIN) verbunden ist und der erste Leistungsverstärker (111) konfiguriert ist, die Verstärkungsverarbeitung für das empfangene voreingestellte Niederfrequenzsignal durchzuführen; und
eine erste Filtereinheit (112), die mit einem Ausgangsanschluss des ersten Leistungsverstärkers (111) und der Schalterschaltung (140) einzeln verbunden und konfiguriert ist, die Filterverarbeitung an dem voreingestellten Niederfrequenzsignal durchzuführen;
wobei die zweite Sendeschaltung (120) umfasst:
einen zweiten Leistungsverstärker (121), wobei ein Eingangsanschluss des zweiten Leistungsverstärkers (121) mit dem Sendeport (4G LB RFIN) verbunden ist;
eine vierte Schaltereinheit (122), wobei ein erstes Ende der vierten Schaltereinheit (122) mit einem Ausgangsanschluss des zweiten Leistungsverstärkers (121) verbunden ist;
eine Vielzahl von zweiten Filtereinheiten (123), wobei Eingangsanschlüsse der Vielzahl von zweiten Filtereinheiten (123) jeweils mit zweiten Enden der vierten Schaltereinheit (122) verbunden sind, Ausgangsanschlüsse der Vielzahl von zweiten Filtereinheiten (123) einzeln mit der Schalterschaltung (140) verbunden sind, die zweiten Filtereinheiten (123) konfiguriert sind, die Filterverarbeitung an den Tiefbandsignalen durchzuführen, und die Frequenzbänder der Tiefbandsignale, die jeweils von der Vielzahl von zweiten Filtereinheiten (123) ausgegeben werden, unterschiedlich sind.

5. Hochfrequenz-L-PA-Mid-Vorrichtung (10) nach einem der Ansprüche 1 bis 4, wobei die Empfangsschaltung (130) umfasst:
einen ersten rauscharmen Verstärker (131), wobei ein Ausgangsanschluss des ersten rauscharmen Verstärkers (131) mit einem der Vielzahl der Empfangsports (LNA OUT1, LNA OUT2, LNA OUT3) verbunden ist und der erste rauscharme Verstärker (131) konfiguriert ist, die Verstärkungsverarbeitung an dem empfangenen voreingestellten Niederfrequenzsignal durchzuführen;
eine dritte Filtereinheit (132), die mit einem Eingangsanschluss des ersten rauscharmen Verstärkers (131) und der Schalterschaltung (140) einzeln verbunden und konfiguriert ist, die Filterverarbeitung an dem empfangenen voreingestellten Niederfrequenzsignal durchzuführen;
mindestens einen zweiten rauscharmen Verstärker (133), wobei ein Ausgangsanschluss jedes mindestens einen zweiten rauscharmen Verstärkers (133) entsprechend mit einem der Vielzahl von Empfangsports (LNA OUT1, LNA OUT2, LNA OUT3) verbunden ist;
eine fünfte Schaltereinheit (134), wobei jedes der ersten Enden der fünften Schaltereinheit (134) in einer Eins-zu-Eins-Weise mit einem Eingangsanschluss jedes der mindestens einen zweiten rauscharmen Verstärkers (133) verbunden ist;
eine Vielzahl von vierten Filtereinheiten (135), wobei ein Eingangsanschluss jeder der Vielzahl von vierten Filtereinheiten (135) mit der Schalterschaltung (140) verbunden ist, ein Ausgangsanschluss jeder der Vielzahl von vierten Filtereinheiten (135) mit einem entsprechenden zweiten Ende der fünften Schaltereinheit (134) verbunden ist, die Vielzahl von vierten Filtereinheiten (135) konfiguriert sind, die Filterverarbeitung an den empfangenen Tiefbandsignalen durchzuführen, und Frequenzbänder der Tiefbandsignale, die jeweils von der Vielzahl von vierten Filtereinheiten (135) ausgegeben werden, unterschiedlich sind; und
eine sechste Schaltereinheit (136), wobei eine Vielzahl von ersten Enden der sechsten Schaltereinheit (136) jeweils mit der Vielzahl von Empfangsports (LNA OUT1, LNA OUT2, LNA OUT3) in einer Eins-zu-Eins-Weise verbunden sind, und eine Vielzahl von zweiten Enden der sechsten Schaltereinheit (136) jeweils mit dem Ausgangsanschluss des ersten rauscharmen Verstärkers (131) und dem Ausgangsanschluss jedes der mindestens einen zweiten rauscharmen Verstärker (133) in einer Eins-zu-Eins-Weise verbunden sind.

6. Hochfrequenz-L-PA-Mid-Vorrichtung (10) nach einem der Ansprüche 1 bis 5, wobei die Hochfrequenz-L-PA-Mid-Vorrichtung (10) weiter mit einer Vielzahl von Hilfs-Sendeports (LB TXOUT1, LB TXOUT2, LB TXOUT3, LB TXOUT4), einer Vielzahl von Hilfs-Sendeempfangsports (LB_TRX1, LB_TRX2, LB_TRX3, LB_TRX4) und einer Vielzahl von Hilfs-Empfangsports (LNA_AUX1, LNA_AUX2, LNA_AUX3, LNA_AUX4) konfiguriert ist, die konfiguriert sind, mit einer externen Schalterschaltung verbunden zu werden; die Vielzahl von Hilfs-Sendeports (LB TXOUT1, LB TXOUT2, LB TXOUT3, LB TXOUT4) mit der zweiten Sendeschaltung (120) verbunden sind, die Vielzahl von Hilfs-Sendeempfangsports (LB_TRX1, LB_TRX2, LB_TRX3, LB_TRX4) mit der Schalterschaltung (140) verbunden sind und die Vielzahl von Hilfs-Empfangsports (LNA_AUX1, LNA_AUX2, LNA_AUX3, LNA_AUX4) mit der Empfangsschaltung (130) verbunden sind.

7. Hochfrequenz-L-PA-Mid-Vorrichtung (10) nach einem der Ansprüche 1 bis 5, wobei die Hochfrequenz-L-PA-Mid-Vorrichtung (10) weiter mit einem Kopplungsausgangsport (CPLOUT) konfiguriert ist und die Hochfrequenz-L-PA-Mid-Vorrichtung (10) weiter umfasst:
eine Kopplungsschaltung (170), die in einem Hochfrequenzpfad zwischen der Schalterschaltung (140) und dem Antennenport (LB ANT) angeordnet und konfiguriert ist, die Tiefbandsignale in dem Hochfrequenzpfad zwischen der Schalterschaltung (140) und dem Antennenport (LB ANT) zu koppeln, um ein gekoppeltes Signal über den Kopplungsausgangsport (CPLOUT) auszugeben.

8. Hochfrequenz-Sendeempfangssystem, umfassend:
die Hochfrequenz-L-PA-Mid-Vorrichtung (10) nach einem der Ansprüche 1 bis 7;
eine Antennengruppe (20), die eine erste Antenne (Ant0) umfasst, die mit dem Antennenport (LB ANT) der Hochfrequenz-L-PA-Mid-Vorrichtung (10) verbunden ist; und
ein Hochfrequenz-Sendeempfänger (30), der mit dem Sendeport (4G LB RFIN) und der Vielzahl der Empfangsports (LNA OUT1, LNA OUT2, LNA OUT3) der Hochfrequenz-L-PA-Mid-Vorrichtung (10) einzeln verbunden ist.

9. Hochfrequenz-Sendeempfangssystem nach Anspruch 8, wobei die Hochfrequenz-L-PA-Mid-Vorrichtung (10) mit einer Vielzahl von Hilfs-Sendeports (LB TXOUT1, LB TXOUT2, LB TXOUT3, LB TXOUT4), einer Vielzahl von Hilfs-Sendeempfangsports (LB_TRX1, LB_TRX2, LB_TRX3, LB_TRX4) und einer Vielzahl von Hilfs-Empfangsports (LNA_AUX1, LNA_AUX2, LNA_AUX3, LNA_AUX4) konfiguriert ist; das Hochfrequenz-Sendeempfangssystem weiter umfasst:
eine Schaltvorrichtung (90), die mit der Vielzahl von Hilfs-Sendeports (LB TXOUT1, LB TXOUT2, LB TXOUT3, LB TXOUT4), der Vielzahl von Hilfs-Sendeempfangsports(LB_TRX1, LB_TRX2, LB_TRX3, LB_TRX4) und der Vielzahl von Hilfs-Empfangsports (LNA_AUX1, LNA_AUX2, LNA_AUX3, LNA_AUX4) einzeln verbunden und konfiguriert ist, die Filterverarbeitung an der Vielzahl von Tiefbandsignalen zu unterstützen.

10. Hochfrequenz-Sendeempfangssystem nach Anspruch 8, wobei die Antennengruppe (20) weiter eine zweite Antenne (Ant1), eine dritte Antenne (Ant2) und eine vierte Antenne (Ant3) umfasst; und das Hochfrequenz-Sendeempfangssystem weiter umfasst:
ein Sendeempfangsmodul (40), das mit einem ersten Antennenport (ANT1) und einem zweiten Antennenport (ANT2) konfiguriert ist, und konfiguriert ist, die Sendeempfangs- und Verstärkungsverarbeitung einer Vielzahl von Mittelbandsignalen und einer Vielzahl von Hochbandsignalen zu unterstützen;
ein Empfangsmodul (50), das mit einem Tiefband-Antennenport (LB ANT), einem Mittel- und Hochband-Antennenport (MHB ANT) und einem Mittel- und Hochband-Sendeempfangsport (MHB TRX1) konfiguriert ist, wobei das Empfangsmodul (50) konfiguriert ist, Diversitätsempfang und Verstärkungsverarbeitung der Vielzahl an Tiefbandsignalen, der Vielzahl an Mittelbandsignalen und der Vielzahl an Hochbandsignalen zu unterstützen;
ein Schaltermodul, das mit dem ersten Antennenport (ANT1), dem zweiten Antennenanschluss (ANT2), dem Tiefband-Antennenport (LB ANT), der dritten Antenne (Ant2) und der vierten Antenne (Ant3) einzeln verbunden ist; und
ein Kombinierermodul, wobei eine Vielzahl erster Enden des Kombinierermoduls jeweils mit dem Antennenport (LB ANT) der Hochfrequenz-L-PA-Mid-Vorrichtung (10), dem Mittel- und Hochband-Antennenport (MHB ANT) und dem Mittel- und Hochband-Sendeempfangsport (MHB TRX1) verbunden sind und zwei zweite Enden des Kombinierermoduls jeweils mit der ersten Antenne (Ant0) und der zweiten Antenne (Ant1) in einer Eins-zu-Eins-Weise verbunden sind;
wobei das Schaltermodul umfasst: eine siebte Schaltereinheit (610); das Kombinierermodul einen ersten Kombinierer (710) und einen zweiten Kombinierer (720) umfasst; die siebte Schaltereinheit (610) zwei erste Enden und vier zweite Enden umfasst;
wobei die zwei ersten Enden der siebten Schaltereinheit (610) jeweils in einer Eins-zu-Eins-Weise mit dem ersten Antennenport (ANT1) und dem zweiten Antennenport (ANT2) verbunden sind; ein zweites Ende der vier zweiten Enden der siebten Schaltereinheit (610) mit einem ersten Ende des ersten Kombinierers (710) verbunden ist, ein anderes erstes Ende des ersten Kombinierers (710) mit dem Antennenport (LB ANT) der Hochfrequenz-L-PA-Mid-Vorrichtung (10) verbunden ist, und ein zweites Ende des ersten Kombinierers (710) mit der ersten Antenne (Ant0) verbunden ist; ein anderes zweites Ende der vier zweiten Enden der siebten Schaltereinheit (610) mit dem Mittel- und Hochband-Sendeempfangsport (MHB TRX1) verbunden ist; ein weiteres zweites Ende der vier zweiten Enden der siebten Schaltereinheit (610) mit der dritten Antenne (Ant2) verbunden ist; ein weiteres zweites Ende der vier zweiten Enden der siebten Schaltereinheit (610) mit der vierten Antenne (Ant3) verbunden ist; der Tiefband-Antennenport (LB ANT) und der Mittel- und Hochband-Antennenport (MHB ANT) des Empfangsmoduls (50) über den zweiten Kombinierer (720) einzeln mit der zweiten Antenne (Ant1) verbunden ist.

11. Hochfrequenz-Sendeempfangssystem nach Anspruch 10, weiter umfassend:
ein erstes Multiple-Input-Multiple-Output-, MIMO, Empfangsmodul (80), das mit dem Hochfrequenz-Sendeempfänger (30) und dem Schaltermodul einzeln verbunden und konfiguriert ist, den primären Empfang und die Verstärkungsverarbeitung einer Vielzahl von Mittelbandsignalen und einer Vielzahl von Hochbandsignalen zu unterstützen; und
ein zweites MIMO-Empfangsmodul (91), das mit dem Hochfrequenz-Sendeempfänger (30) und dem Schaltermodul einzeln verbunden und konfiguriert ist, den Diversitätsempfang und die Verstärkungsverarbeitung einer Vielzahl von Mittelbandsignalen und einer Vielzahl von Hochbandsignalen zu unterstützen;
wobei das Schaltermodul weiter umfasst:
eine achte Schaltereinheit (620), wobei ein erstes Ende der achten Schaltereinheit (620) mit dem weiteren zweiten Ende der siebten Schaltereinheit (610) verbunden ist, ein anderes erstes Ende der achten Schaltereinheit (620) mit dem ersten MIMO-Empfangsmodul (80) verbunden ist und ein zweites Ende der achten Schaltereinheit (620) mit der dritten Antenne (Ant2) verbunden ist; und
eine neunte Schaltereinheit (630), wobei ein erstes Ende der neunten Schaltereinheit (630) mit dem weiteren zweiten Ende der siebten Schaltereinheit (610) verbunden ist, ein anderes erstes Ende der neunten Schaltereinheit (630) mit dem zweiten MIMO-Empfangsmodul (91) verbunden ist und das zweite Ende der neunten Schaltereinheit (630) mit der vierten Antenne (Ant3) verbunden ist.

12. Kommunikationsvorrichtung, umfassend:
das Hochfrequenz-Sendeempfangssystem nach einem der Ansprüche 8 bis 11.

## Revendications

1. Dispositif amplificateur à faible bruit plus modules amplificateurs de puissance avec duplexeurs intégrés (L-PA Mid) radiofréquence (10), configuré avec un port d'émission (4G LB RFIN), un port d'antenne (LB ANT) et une pluralité de ports de réception (LNA OUT1, LNA OUT2, LNA OUT3) ; le dispositif L-PA Mid radiofréquence (10) comprenant :
un premier circuit d'émission (110), connecté au port d'émission (4G LB RFIN) et configuré pour effectuer un traitement d'amplification et de filtrage sur un signal basse fréquence prédéfini reçu par le port d'émission (4G LB RFIN) ;
un second circuit d'émission (120), connecté au port d'émission (4G LB RFIN) et configuré pour effectuer un traitement d'amplification et de filtrage sur une pluralité de signaux de bande basse reçus par le port d'émission (4G LB RFIN), dans lequel la pluralité de signaux de bande basse comprennent des signaux dans les bandes de fréquences B8, B12, B20, B26, N8, N20, N26, B28, B13 et B19;
un circuit de réception (130), connecté à la pluralité de ports de réception (LNA OUT1, LNA OUT2, LNA OUT3) et configuré pour effectuer un traitement d'amplification et de filtrage sur le signal basse fréquence prédéfini et la pluralité de signaux de bande basse ; et
un circuit de commutation (140), dans lequel une pluralité de premières extrémités du circuit de commutation (140) sont respectivement connectées au premier circuit d'émission (110), au second circuit d'émission (120) et au circuit de réception (130), une seconde extrémité du circuit de commutation (140) est connectée au port d'antenne (LB ANT), et le circuit de commutation (140) est configuré pour permettre l'activation sélective de chemins radiofréquence respectivement entre le premier circuit d'émission (110) et le port d'antenne (LB ANT), entre le second circuit d'émission (120) et le port d'antenne (LB ANT), et entre le circuit de réception (130) et le port d'antenne (LB ANT) ; et le signal basse fréquence prédéfini et la pluralité de signaux de bande basse présentent des plages de fréquences différentes ;
**caractérisé en ce que**,
le signal basse fréquence prédéfini sur lequel le premier circuit d'émission effectue un traitement d'amplification et de filtrage est un signal de la bande de fréquences N28, et la pluralité de signaux de bande basse sur lesquels le second circuit d'émission effectue un traitement d'amplification et de filtrage comprennent des signaux dans les bandes de fréquences B8, B12, B20, B26, N8, N20, N26, B28, B13 et B19 ; et
le circuit de commutation (140) comprend :
une première unité de commutation (141), comprenant une pluralité de premières extrémités et une seconde extrémité, dans lequel la pluralité de premières extrémités de la première unité de commutation (141) sont respectivement connectées au second circuit d'émission (120) et au circuit de réception (130) ; et
une deuxième unité de commutation (142), comprenant deux premières extrémités et une seconde extrémité ; dans lequel l'une des deux premières extrémités de la deuxième unité de commutation (142) est connectée à la seconde extrémité de la première unité de commutation (141), l'autre des deux premières extrémités de la deuxième unité de commutation (142) est connectée au premier circuit d'émission (110), et la seconde extrémité de la deuxième unité de commutation (142) est connectée au port d'antenne (LB ANT).

2. Dispositif L-PA Mid radiofréquence (10) selon la revendication 1, comprenant en outre :
une troisième unité de commutation (150), dans lequel une première extrémité de la troisième unité de commutation (150) est connectée au port d'émission (4G LB RFIN), et deux secondes extrémités de la troisième unité de commutation (150) sont respectivement connectées à une borne d'entrée du premier circuit d'émission (110) et à une borne d'entrée du second circuit d'émission (120).

3. Dispositif L-PA Mid radiofréquence (10) selon la revendication 1, dans lequel un nombre des ports d'émission (4G LB RFIN) est multiple, et les multiples ports d'émission (4G LB RFIN) servent respectivement de premier port d'émission (4G LB1 RFIN) et de second port d'émission (4G LB0 RFIN) ;
dans lequel une borne d'entrée du premier circuit d'émission (110) est connectée au premier port d'émission (4G LB1 RFIN), et une borne d'entrée du second circuit d'émission (120) est connectée au second port d'émission (4G LB0 RFIN).

4. Dispositif L-PA Mid radiofréquence (10) selon l'une quelconque des revendications 1 à 3, dans lequel le premier circuit d'émission (110) comprend :
un premier amplificateur de puissance (111), dans lequel une borne d'entrée du premier amplificateur de puissance (111) est connectée au port d'émission (4G LB RFIN), et le premier amplificateur de puissance (111) est configuré pour effectuer le traitement d'amplification sur le signal basse fréquence prédéfini reçu ; et
une première unité de filtrage (112), connectée à une borne de sortie du premier amplificateur de puissance (111) et au circuit de commutation (140) individuellement et configurée pour effectuer le traitement de filtrage sur le signal basse fréquence prédéfini ;
dans lequel le second circuit d'émission (120) comprend :
un second amplificateur de puissance (121), dans lequel une borne d'entrée du second amplificateur de puissance (121) est connectée au port d'émission (4G LB RFIN) ;
une quatrième unité de commutation (122), dans lequel une première extrémité de la quatrième unité de commutation (122) est connectée à une borne de sortie du second amplificateur de puissance (121) ;
une pluralité de deuxièmes unités de filtrage (123), dans lequel les bornes d'entrée de la pluralité de deuxièmes unités de filtrage (123) sont respectivement connectées aux secondes extrémités de la quatrième unité de commutation (122), les bornes de sortie de la pluralité de deuxièmes unités de filtrage (123) sont individuellement connectées au circuit de commutation (140), les deuxièmes unités de filtrage (123) sont configurées pour effectuer le traitement de filtrage sur les signaux de bande basse, et les bandes de fréquences des signaux de bande basse respectivement sortis par la pluralité de deuxièmes unités de filtrage (123) sont différentes.

5. Dispositif L-PA Mid radiofréquence (10) selon l'une quelconque des revendications 1 à 4, dans lequel le circuit de réception (130) comprend :
un premier amplificateur à faible bruit (131), dans lequel une borne de sortie du premier amplificateur à faible bruit (131) est connectée à l'un de la pluralité de ports de réception (LNA OUT1, LNA OUT2, LNA OUT3), et le premier amplificateur à faible bruit (131) est configuré pour effectuer le traitement d'amplification sur le signal basse fréquence prédéfini reçu ;
une troisième unité de filtrage (132), connectée à une borne d'entrée du premier amplificateur à faible bruit (131) et au circuit de commutation (140) individuellement, et configurée pour effectuer le traitement de filtrage sur le signal basse fréquence prédéfini reçu ;
au moins un second amplificateur à faible bruit (133), dans lequel une borne de sortie de chacun du au moins un second amplificateur à faible bruit (133) est connectée de manière correspondante à l'un de la pluralité de ports de réception (LNA OUT1, LNA OUT2, LNA OUT3) ;
une cinquième unité de commutation (134), dans lequel chacune des premières extrémités de la cinquième unité de commutation (134) est connectée à une borne d'entrée de chacun du au moins un second amplificateur à faible bruit (133) d'une manière biunivoque ;
une pluralité de quatrièmes unités de filtrage (135), dans lequel une borne d'entrée de chacune de la pluralité de quatrièmes unités de filtrage (135) est connectée au circuit de commutation (140), une borne de sortie de chacune de la pluralité de quatrièmes unités de filtrage (135) est connectée à une seconde extrémité correspondante de la cinquième unité de commutation (134), la pluralité de quatrièmes unités de filtrage (135) sont configurées pour effectuer le traitement de filtrage sur les signaux de bande basse reçus, et les bandes de fréquences des signaux de bande basse respectivement sortis par la pluralité de quatrièmes unités de filtrage (135) sont différentes ; et
une sixième unité de commutation (136), dans lequel une pluralité de premières extrémités de la sixième unité de commutation (136) sont respectivement connectées à la pluralité de ports de réception (LNA OUT1, LNA OUT2, LNA OUT3) d'une manière biunivoque, et une pluralité de secondes extrémités de la sixième unité de commutation (136) sont respectivement connectées à la borne de sortie du premier amplificateur à faible bruit (131) et à la borne de sortie de chacun du au moins un second amplificateur à faible bruit (133) d'une manière biunivoque.

6. Dispositif L-PA Mid radiofréquence (10) selon l'une quelconque des revendications 1 à 5, dans lequel le dispositif L-PA Mid radiofréquence (10) est en outre configuré avec une pluralité de ports d'émission auxiliaires (LB TXOUT1, LB TXOUT2, LB TXOUT3, LB TXOUT4), une pluralité de ports d'émission-réception auxiliaires (LB_TRX1, LB_TRX2, LB_TRX3, LB_TRX4) et une pluralité de ports de réception auxiliaires (LNA_AUX1, LNA_AUX2, LNA_AUX3, LNA_AUX4), qui sont configurés pour être connectés à un circuit de commutation externe ; la pluralité de ports d'émission auxiliaires (LB TXOUT1, LB TXOUT2, LB TXOUT3, LB TXOUT4) sont connectés au second circuit d'émission (120), la pluralité de ports d'émission-réception auxiliaires (LB_TRX1, LB_TRX2, LB_TRX3, LB_TRX4) sont connectés au circuit de commutation (140), et la pluralité de ports de réception auxiliaires (LNA_AUX1, LNA_AUX2, LNA_AUX3, LNA_AUX4) sont connectés au circuit de réception (130).

7. Dispositif L-PA Mid radiofréquence (10) selon l'une quelconque des revendications 1 à 5, dans lequel le dispositif L-PA Mid radiofréquence (10) est en outre configuré avec un port de sortie de couplage (CPLOUT), et le dispositif L-PA Mid radiofréquence (10) comprend en outre :
un circuit de couplage (170), disposé dans un chemin radiofréquence entre le circuit de commutation (140) et le port d'antenne (LB ANT) et configuré pour coupler les signaux de bande basse dans le chemin radiofréquence entre le circuit de commutation (140) et le port d'antenne (LB ANT) pour sortir un signal couplé via le port de sortie de couplage (CPLOUT).

8. Système d'émission-réception radiofréquence, comprenant :
le dispositif L-PA Mid radiofréquence (10) selon l'une quelconque des revendications 1 à 7 ;
un groupe d'antennes (20), comprenant une première antenne (Ant0) connectée au port d'antenne (LB ANT) du dispositif L-PA Mid radiofréquence (10) ; et
un émetteur-récepteur radiofréquence (30), connecté au port d'émission (4G LB RFIN) et à la pluralité de ports de réception (LNA OUT1, LNA OUT2, LNA OUT3) du dispositif L-PA Mid radiofréquence (10) individuellement.

9. Système d'émission-réception radiofréquence selon la revendication 8, dans lequel le dispositif L-PA Mid radiofréquence (10) est configuré avec une pluralité de ports d'émission auxiliaires (LB TXOUT1, LB TXOUT2, LB TXOUT3, LB TXOUT4), une pluralité de ports d'émission-réception auxiliaires (LB_TRX1, LB_TRX2, LB_TRX3, LB_TRX4), et une pluralité de ports de réception auxiliaires (LNA_AUX1, LNA_AUX2, LNA_AUX3, LNA_AUX4) ; le système d'émission-réception radiofréquence comprend en outre :
un circuit de commutation (90), connecté à la pluralité de ports d'émission auxiliaires (LB TXOUT1, LB TXOUT2, LB TXOUT3, LB TXOUT4), à la pluralité de ports d'émission-réception auxiliaires (LB_TRX1, LB_TRX2, LB_TRX3, LB_TRX4) et à la pluralité de ports de réception auxiliaires (LNA_AUX1, LNA_AUX2, LNA_AUX3, LNA_AUX4) individuellement, et configuré pour prendre en charge un traitement de filtrage sur la pluralité de signaux de bande basse.

10. Système d'émission-réception radiofréquence selon la revendication 8, dans lequel le groupe d'antennes (20) comprend en outre une deuxième antenne (Ant1), une troisième antenne (Ant2) et une quatrième antenne (Ant3) ; et le système d'émission-réception radiofréquence comprend en outre :
un module d'émission-réception (40), configuré avec un premier port d'antenne (ANT1) et un second port d'antenne (ANT2), et configuré pour prendre en charge un traitement d'émission-réception et d'amplification d'une pluralité de signaux de bande intermédiaire et d'une pluralité de signaux de bande haute ;
un module de réception (50), configuré avec un port d'antenne de bande basse (LB ANT), un port d'antenne de bande intermédiaire et haute (MHB ANT) et un port d'émission-réception de bande intermédiaire et haute (MHB TRX1), dans lequel le module de réception (50) est configuré pour prendre en charge un traitement de réception en diversité et d'amplification de la pluralité de signaux de bande basse, de la pluralité de signaux de bande intermédiaire et de la pluralité de signaux de bande haute ;
un module de commutation, connecté au premier port d'antenne (ANT1), au second port d'antenne (ANT2), au port d'antenne de bande basse (LB ANT), à la troisième antenne (Ant2) et à la quatrième antenne (Ant3) individuellement ; et
un module combinateur, dans lequel une pluralité de premières extrémités du module combinateur sont respectivement connectées au port d'antenne (LB ANT) du dispositif L-PA Mid radiofréquence (10), au port d'antenne de bande intermédiaire et haute (MHB ANT) et au port d'émission-réception de bande intermédiaire et haute (MHB TRX1), et deux secondes extrémités du module combinateur sont respectivement connectées à la première antenne (Ant0) et à la deuxième antenne (Ant1) d'une manière biunivoque ;
dans lequel le module de commutation comprend : une septième unité de commutation (610) ; le module combinateur comprend un premier combinateur (710) et un second combinateur (720) ; la septième unité de commutation (610) comprend deux premières extrémités et quatre secondes extrémités ;
dans lequel les deux premières extrémités de la septième unité de commutation (610) sont respectivement connectées au premier port d'antenne (ANT1) et au second port d'antenne (ANT2) d'une manière biunivoque ; une seconde extrémité des quatre secondes extrémités de la septième unité de commutation (610) est connectée à une première extrémité du premier combinateur (710), une autre première extrémité du premier combinateur (710) est connectée au port d'antenne (LB ANT) du dispositif L-PA Mid radiofréquence (10), et une seconde extrémité du premier combinateur (710) est connectée à la première antenne (Ant0) ; une autre seconde extrémité des quatre secondes extrémités de la septième unité de commutation (610) est connectée au port d'émission-réception de bande intermédiaire et haute (MHB TRX1) ; encore une autre seconde extrémité des quatre secondes extrémités de la septième unité de commutation (610) est connectée à la troisième antenne (Ant2) ; toujours une autre seconde extrémité des quatre secondes extrémités de la septième unité de commutation (610) est connectée à la quatrième antenne (Ant3) ; le port d'antenne de bande basse (LB ANT) et le port d'antenne de bande intermédiaire et haute (MHB ANT) du module de réception (50) sont connectés individuellement à la deuxième antenne (Ant1) via le second combinateur (720).

11. Système d'émission-réception radiofréquence selon la revendication 10, comprenant en outre :
un premier module de réception entrée multiple sortie multiple, MIMO (80), connecté à l'émetteur-récepteur radiofréquence (30) et au module de commutation individuellement et configuré pour prendre en charge un traitement de réception et d'amplification primaire d'une pluralité de signaux de bande intermédiaire et d'une pluralité de signaux de bande haute ; et
un second module de réception MIMO (91), connecté à l'émetteur-récepteur radiofréquence (30) et au module de commutation individuellement et configuré pour prendre en charge un traitement de réception en diversité et d'amplification d'une pluralité de signaux de bande intermédiaire et d'une pluralité de signaux de bande haute ;
dans lequel le module de commutation comprend en outre :
une huitième unité de commutation (620), dans lequel une première extrémité de la huitième unité de commutation (620) est connectée à l'encore une autre seconde extrémité de la septième unité de commutation (610), une autre première extrémité de la huitième unité de commutation (620) est connectée au premier module de réception MIMO (80), et une seconde extrémité de la huitième unité de commutation (620) est connectée à la troisième antenne (Ant2) ; et
une neuvième unité de commutation (630), dans lequel une première extrémité de la neuvième unité de commutation (630) est connectée à la toujours une autre seconde extrémité de la septième unité de commutation (610), une autre première extrémité de la neuvième unité de commutation (630) est connectée au second module de réception MIMO (91), et la seconde extrémité de la neuvième unité de commutation (630) est connectée à la quatrième antenne (Ant3).

12. Dispositif de communication, comprenant :
le système d'émission-réception radiofréquence selon l'une quelconque des revendications 8 à 11.
